# EUROPEAN PATENT SPECIFICATION

(11) **EP 0 603 823 B1**
(45) Date of publication and mention of the grant of the patent: **17.06.1998**
(21) Application number: 93120615.5
(22) Date of filing: 21.12.1993
(51) Int. Cl.: C09B 67/22, D06P 3/66, C09B 62/503, C09B 62/44

(54) **Reactive dye composition and method for dyeing or printing cellulose fiber material using the same**
Reaktivfarbstoffzusammensetzung und Verfahren zum Färben und Bedrucken von Cellulosefasermaterialien mittels derselben
Composition de colorants réactifs et méthode de teinture ou d'impression de matériau fibreux cellulosique les contenant

(30) Priority: 22.12.1992 JP 356630/92
(43) Date of publication of application: 29.06.1994
(73) Proprietor: SUMITOMO CHEMICAL COMPANY LIMITED, Osaka-shi, Osaka 541 (JP)
(72) Inventor: Kawabata, Shigeru, Ibaraki-shi (JP); Harada, Naoki, Ibaraki-shi (JP); Hashizume, Shuhei, Osaka-shi (JP)
(74) Representative: VOSSIUS & PARTNER

(56) References cited:
- EP-A- 0 224 224
- EP-A- 0 300 195
- EP-A- 0 325 246
- EP-A- 0 539 836
- GB-A- 2 198 447
- PATENT ABSTRACTS OF JAPAN vol. 16, no. 194 (C-0938)31 January 1992 & JP-A-04 028 769 (SUMITOMO)

## Description

The present invention relates to a reactive dye composition and a method for dyeing or printing cellulose fiber materials using the same.

As a water-soluble reactive dye for dyeing cellulose fiber materials or cellulose fiber-containing fiber materials, a variety of compounds is known. As a reactive dye used for dyeing the fiber materials in blue color, azo, formazan, phthalocyanine and anthraquinone dyes are well known. Dioxazine type reactive dyes have also been developed recently.

However, these blue dyes are all disadvantageous in some respect. Generally speaking, phthalocyanine dyes are inferior in color yield and build-up property. Azo and formazan dyes cannot produce a vivid hue. Anthraquinone dyes cannot show a high color yield when used for dyeing the fiber materials by an exhaustion dyeing method using a small amount of salt, and the color yield varies with change of dyeing temperatures. Dioxazine dyes are used with inevitable disadvantages such that color yield greatly varies with change of the amount of salt used in the exhaustion dyeing.

Thus, in view of the above-mentioned state of the art, the object of the present invention is to obtain a dye capable of always giving a high color yield even if small amounts of salt are used in the exhaustion dyeing, excellent in dyeing reproducibility and excellent in various dye characteristics. This object was solved by the finding that a reactive dye composition comprising a specific dioxazine compound and a specific anthraquinone compound can achieve the object without deteriorating the excellent dye characteristics of the dioxazine and anthraquinone compounds such as, for example, high vividness and build-up property.

Thus, the present invention provides a reactive dye composition comprising:
A) at least one member selected from the dioxazine compound group represented by the following formula (I) in the free acid form: 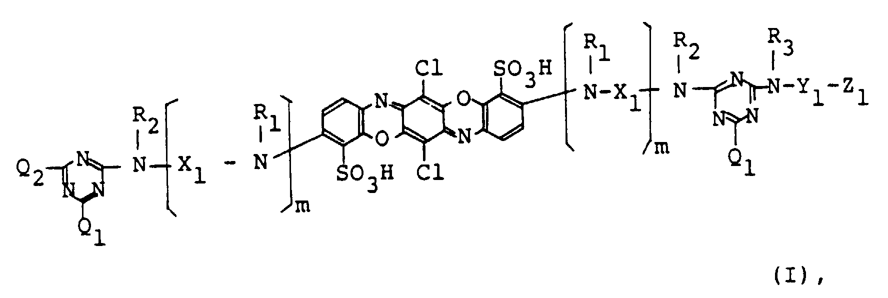 wherein R₁, R₂ and R₃ are independently hydrogen or unsubstituted or substituted lower alkyl, X₁ is an unsubstituted or substituted and straight, branched or cyclic aliphatic bridging group or an unsubstituted or substituted aromatic bridging group, m is 0 or 1, Y₁ is unsubstituted or substituted phenylene or unsubstituted or substituted naphthylene, Z₁ is -SO₂CH=CH₂ or -SO₂CH₂CH₂L₁ in which L₁ is a group capable of being split by the action of an alkali, Q₁ is halogeno, unsubstituted or substituted pyridinio, -N(R₄)R₅, -OR₆ or -SR₇ in which R₄, R₅, R₆ and R₇ are independently hydrogen or an unsubstituted or substituted alkyl, phenyl, naphthyl or benzyl group, and Q₂ is chloro or fluoro; or
   at least one member selected from the dioxazine compound group represented by the following formula (II) in the free acid form: 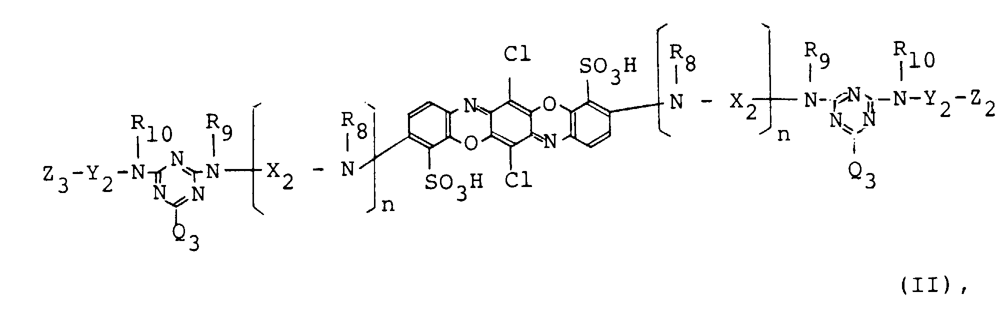 wherein R₈, R₉ and R₁₀ are independently hydrogen or unsubstituted or substituted lower alkyl, X₂ is an unsubstituted or substituted and straight, branched or cyclic aliphatic bridging group or an unsubstituted or substituted aromatic bridging group, n is 0 or 1, Y₂ is unsubstituted or substituted phenylene or unsubstituted or substituted naphthylene, Z₂ and Z₃ are independently -SO₂CH=CH₂ or -SO₂CH₂CH₂L₂ in which L₂ is a group capable of being split by the action of an alkali, and Q₃ is halogeno, unsubstituted or substituted pyridinio, -N(R₁₁)R₁₂, -OR₁₃ or -SR₁₄ in which R₁₁, R₁₂, R₁₃ and R₁₄ are independently hydrogen or an unsubstituted or substituted alkyl, phenyl, naphthyl or benzyl group; or
   a mixture of the dioxazine compound of the formula (I) and the dioxazine compound of the formula (II); and
B) at least one member selected from the anthraquinone compound group represented by the following formula (III) in the free acid form: 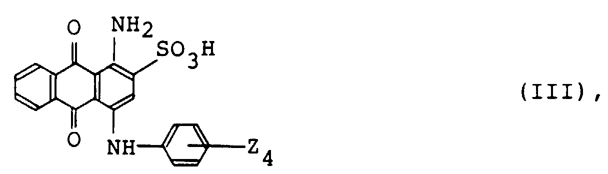 wherein Z₄ is -SO₂CH=CH₂ or -SO₂CH₂CH₂L₃ in which L₃ is a group capable of being split by the action of an alkali.

The present invention also provides a method for dyeing or printing a cellulose fiber material or a fiber material containing cellulose fiber by the use of said reactive dye composition.

The aliphatic bridging group represented by X₁ and X₂ in the formulas (I) and (II), respectively, may contain a hetero atom, and may be unsubstituted or substituted by sulfo, carboxy, methyl, methoxy, unsubstituted or substituted phenyl or the like. In the case both X₁ and X₂ are the aliphatic bridging groups, they may be the same or different. Examples of the preferable group are as follows:
-(CH₂)₂₋₆-, 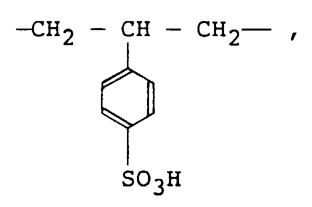 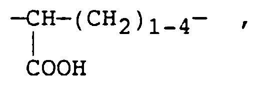 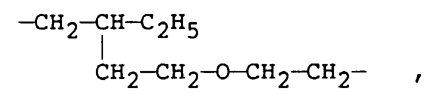 -C₂H₄-O-C₂H₄- , -C₂H₄-S-C₂H₄- ,

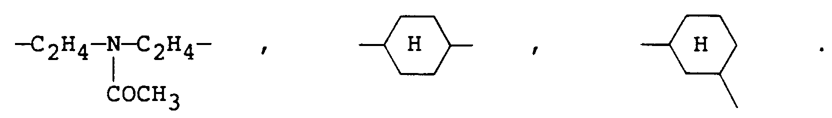

The aromatic bridging group represented by X₁ and X₂, may contain a hetero atom, and may be unsubstituted or substituted by sulfo, carboxy, methyl, methoxy, unsubstituted or substituted phenyl or the like. Examples of the preferable group are as follows:

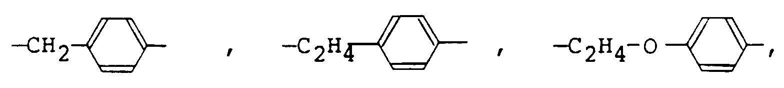

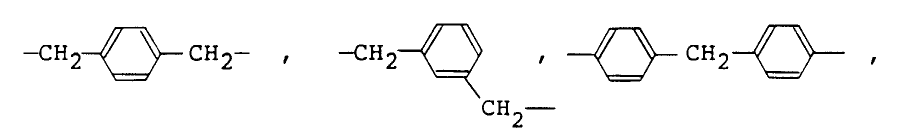

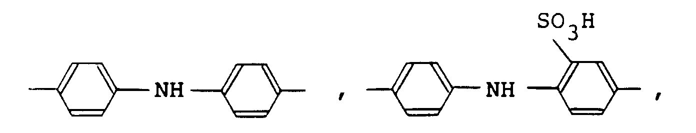

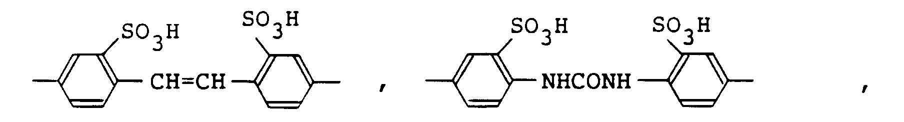

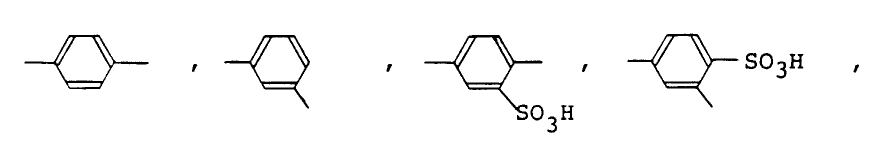

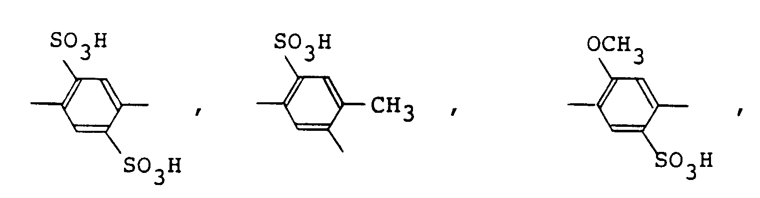

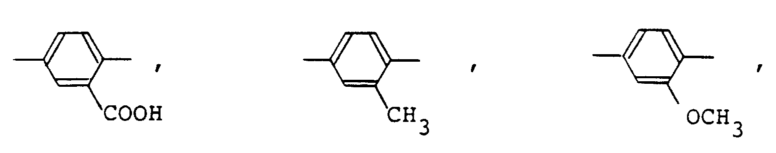

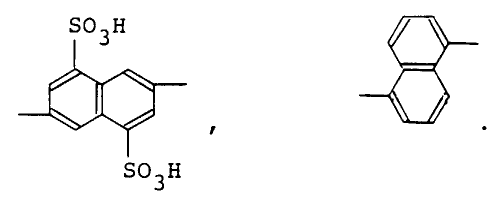

Of the examples enumerated above, it is particularly preferable that X₁ and X₂ are independently selected from ethylene, propylene, phenylene and phenylene having one or two sulfo groups.

When an alkyl group is selected as any of R₄ to R₇ and R₁₁ to R₁₄, the group is preferably an alkyl group having 1 to 4 carbon atoms which may be unsubstituted or substituted by one or two substituents selected from the group consisting of alkoxy, sulfo, carboxy, hydroxy, chloro, phenyl and sulfato. Particularly preferred are methyl, ethyl, n-propyl, isopropyl, n-butyl, isobutyl, sec-butyl, β-hydroxyethyl, β-sulfatoethyl, β-sulfoethyl, β-methoxyethyl, β-carboxyethyl, and the like. In the case where two or more of R₄ to R₇ and R₁₁ to R₁₄ are alkyl groups, they are the same or different.

When unsubstituted or substituted phenyl is selected as any of R₄ to R₇ and R₁₁ to R₁₄, the group is preferably phenyl or phenyl substituted by one or two substituents selected from the group consisting of C₁-C₄ alkyl, C₁-C₄ alkoxy, sulfo, carboxy, chloro and bromo. Particularly preferred are 2-, 3- or 4-sulfophenyl, 2,4- or 2,5-disulfophenyl, 2-, 3- or 4-carboxyphenyl, phenyl and the like. In the case where two or more of R₄ to R7 and R₁₁ to R₁₄ are unsubstituted or substituted phenyl groups, they are the same or different.

When unsubstituted or substituted naphthyl is selected as any of R₄ to R₇ and R₁₁ to R₁₄, the group is preferably naphthyl or naphthyl substituted by one, two or three substituents selected from the group consisting of hydroxy, carboxy, sulfo, C₁-C₄ alkyl, C₁-C₄ alkoxy and chloro. Particularly preferred are 2-, 3-, 4-, 5-, 6-, 7- and 8-sulfo-2-naphthyl, 1,5-, 5,7-, 6,8-, 4,8-, 4,7-, 3,8-, 4,6-, 3,7- and 3,6-disulfo-2-naphthyl, 4,6,8-, 2,4,7- and 3,6,8-trisulfo-1-naphthyl, 1,5,7-, 4,6,8- and 3,6,8-trisulfo-2-naphthyl, and the like. In the case where two or more of R₄ to R₇ and R₁₁ to R₁₄ are unsubstituted or substituted naphthyl groups, they are the same or different.

When unsubstituted or substituted benzyl is selected as any of R₄ to R₇ and R₁₁ to R₁₄, the group is preferably benzyl or benzyl substituted by one or two substituents selected from the group consisting of C₁-C₄ alkyl, C₁-C₄ alkoxy, sulfo and chloro. Particularly preferred are benzyl, 2-, 3- and 4-sulfobenzyl, and the like. In the case where two or more of R₄ to R₇ and R₁₁ to R₁₄ are unsubstituted or substituted benzyl, they are the same or different.

When halogeno is selected as Q₁ and/or Q₃, it is preferably chloro or fluoro. In the case both Q₁ and Q₃ are halogeno, they are the same or different. When unsubstituted or substituted pyridinio is selected as Q₁ and/or Q₃, it is preferably pyridinio or pyridinio substituted by carboxy or carbamoyl. In the case both Q₁ and Q₃ are unsubstituted or substituted pyridinio, they are the same or different.

When a group -N(R₄)R₅ or a group -N(R₁₁)R₁₂ is selected as Q₁ and/or Q₃, it can be introduced in the molecule of the dioxazine compound by the use of a compound represented by the formula HN(R₄)R₅ or HN(R₁₁)R₁₂. Specific examples of the compound represented by the formula HN(R₄)R₅ or HN(R₁₁)R₁₂ are as follows:
ammonia;
aromatic amines such as 1-aminobenzene, 1-amino-2-, -3- or -4-methylbenzene, 1-amino-3,4- or -3,5-dimethylbenzene, 1-amino-2-, -3- or -4-ethylbenzene, 1-amino-2-, -3- or -4-methoxybenzene, 1-amino-2-, -3- or -4-ethoxybenzene, 1-amino-2-, -3- or -4-chlorobenzene, 3- or 4-aminophenylmethanesulfonic acid, 2-aminobenzenesulfonic acid, 3-aminobenzenesulfonic acid, 4-aminobenzenesulfonic acid, 3-methylaminobenzenesulfonic acid, 3-ethylaminobenzenesulfonic acid, 4-methylaminobenzenesulfonic acid, 4-ethylaminobenzenesulfonic acid, 5-aminobenzene-1,3-disulfonic acid, 6-aminobenzene-1,4-disulfonic acid, 6-aminobenzene-1,3-disulfonic acid, 4-aminobenzene-1,2-disulfonic acid, 4-amino-5-methylbenzene-1,2-disulfonic acid, 2-, 3- or 4-aminobenzoic acid, 5-aminobenzene-1,3-dicarboxylic acid, 5-amino-2-hydroxybenzenesulfonic acid, 4-amino-2-hydroxybenzenesulfonic acid, 5-amino-2-ethoxybenzenesulfonic acid, N-methylaminobenzene, N-ethylaminobenzene, 1-methylamino-3- or -4-methylbenzene, 1-ethylamino-4-chlorobenzene, 1-ethylamino-3- or -4-methylbenzene, 1-(2-hydroxyethyl)-amino-3-methylbenzene, 3- or 4-methylaminobenzoic acid, 3- or 4-methylaminobenzenesulfonic acid, 2-aminonaphthalene-1-sulfonic acid, 4-aminonaphthalene-1-sulfonic acid, 5-aminonaphthalene-1-sulfonic acid, 6-aminonaphthalene-1-sulfonic acid, 7-aminonaphthalene-1-sulfonic acid, 8-aminonaphthalene-1-sulfonic acid, 1-aminonaphthalene-2-sulfonic acid, 5-aminonaphthalene-2-sulfonic acid, 6-aminonaphthalene-2-sulfonic acid, 7-aminonaphthalene-2-sulfonic acid, 7-methylaminonaphthalene-2-sulfonic acid, 7-ethylaminonaphthalene-2-sulfonic acid, 7-butylaminonaphthalene-2-sulfonic acid, 7-isobutylaminonaphthalene-2-sulfonic acid, 8-aminonaphthalene-2-sulfonic acid, 4-aminonaphthalene-1,3-disulfonic acid, 5-aminonaphthalene-1,3-disulfonic acid, 6-aminonaphthalene-1,3-disulfonic acid, 7-aminonaphthalene-1,3-disulfonic acid, 8-aminonaphthalene-1,3-disulfonic acid, 2-aminonaphthalene-1,5-disulfonic acid, 3-aminonaphthalene-1,5-disulfonic acid, 4-aminonaphthalene-1,5-disulfonic acid, 4-aminonaphthalene-1,6-disulfonic acid, 8-aminonaphthalene-1,6-disulfonic acid, 4-aminonaphthalene-1,7-disulfonic acid, 3-aminonaphthalene-2,6-disulfonic acid, 4-aminonaphthalene-2,6-disulfonic acid, 3-aminonaphthalene-2,7-disulfonic acid, 4-aminonaphthalene-2,7-disulfonic acid, 6-aminonaphthalene-1,3,5-trisulfonic acid, 7-aminonaphthalene-1,3,5-trisulfonic acid, 4-aminonaphthalene-1,3,6-trisulfonic acid, 7-aminonaphthalene-1,3,6-trisulfonic acid, 8-aminonaphthalene-1,3,6-trisulfonic acid and 4-aminonaphthalene-1,3,7-trisulfonic acid; and
aliphatic amines such as methylamine, ethylamine, n-propylamine, isopropylamine, n-butylamine, isobutylamine, sec-butylamine, dimethylamine, diethylamine, methylethylamine, allylamine, 2-chloroethylamine, 2-methoxyethylamine, 2-aminoethanol, bis(2-hydroxyethyl)amine, 2-acetylaminoethylamine, 1-amino-2-propanol, 3-methoxypropylamine, 1-amino-3-dimethylaminopropane, 2-aminoethanesulfonic acid, aminomethanesulfonic acid, 2-methylaminoethanesulfonic acid, 3-amino-l-propanesulfonic acid, 2-sulfatoethylamic acid, aminoacetic acid, methylaminoacetic acid, ε-aminocaproic acid, benzylamine, 2-, 3- or 4-chlorobenzylamine, 4-methylbenzylamine, N-methylbenzylamine, 2-, 3- or 4-sulfobenzylamine, 2-phenylethylamine and 1-phenyl-2-propylamine.

When a group -OR₆ or -OR₁₃ is selected as Q₁ and/or Q₃, it can be introduced in the molecule of the dioxazine compound by the use of a compound represented by R₆OH or R₁₃OH, i.e. any of the compounds enumerated above of which amino group has been replaced by a hydroxy group. In the case both Q₁ and Q₃ represent a group -OR₆ or a group -OR₁₃, they are the same or different.

When a group -SR₇ or a group -SR₁₄ is selected as Q₁ and/or Q₃, it can be introduced in the molecule of the dioxazine compound by the use of a thiol compound represented by R₇SH and R₁₄SH, i.e. any of the compounds enumerated above of which amino group has been replaced by a mercapto group. In the case both Q₁ and Q₃ represent a group -SR₇ or a group -SR₁₄, they are the same or different.

In the present invention, particularly preferable Q₁ and Q₃ are aniline, N-methylaniline, N-ethylaniline, 2-, 3- or 4-amino-benzenesulfonic acid, 3- or 4-ethylaminobenzenesulfonic acid, 6-aminobenzene-1,3- or -1,4-disulfonic acid, 2-, 3- or 4-aminobenzoic acid, taurine, N-methyltaurine, mono- or diethanolamine and the like. In the case both Q₁ and Q₃ represent -N(R₄)R₅ or -N(R₁₁)R₁₂, they are the same or different.

Y₁ and Y₂ are preferably unsubstituted phenylene, phenylene substituted by one or two substituents selected from the group consisting of methyl, ethyl, methoxy, ethoxy, chloro, bromo and sulfo, unsubstituted naphthylene or naphthylene substituted once with sulfo. Some of the examples of preferable phenylene and naphthylene groups are as follows: 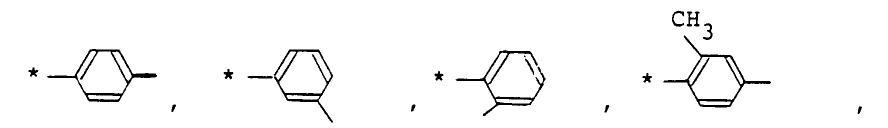 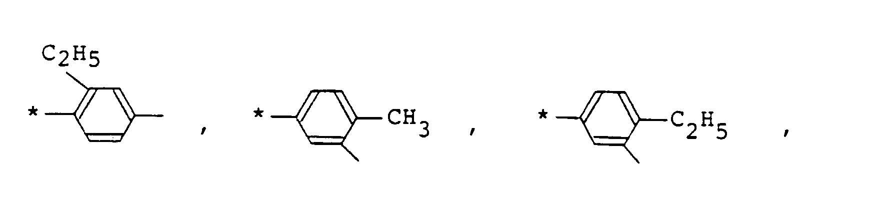 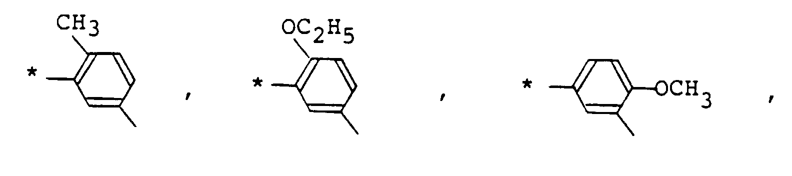 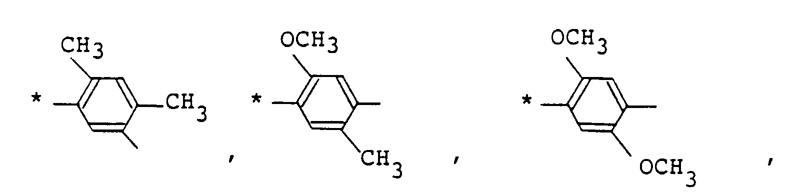 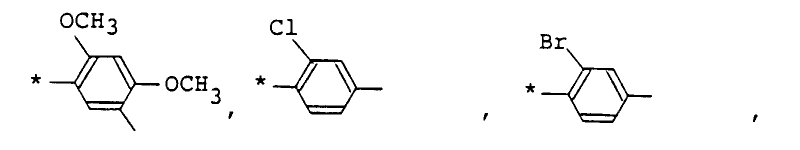 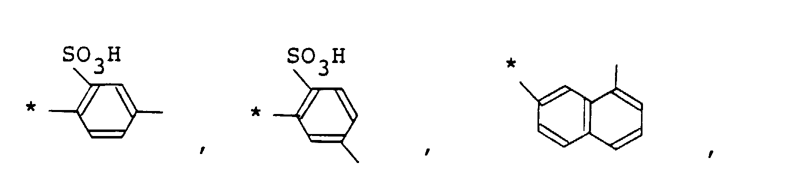 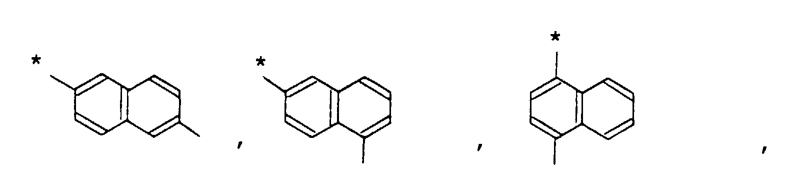 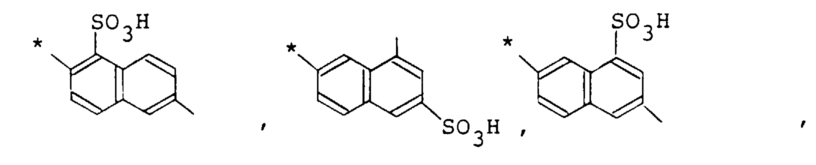 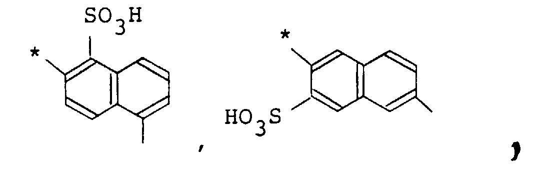 wherein the asterisk denotes a bond linking to 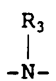 or 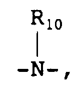 and the like.

Specific examples of the group capable of being split by the action of an alkali represented by L₁, L₂ and L₃ in the fiber reactive groups represented by Z₁ to Z₄ are sulfuric acid ester group, thiosulfuric acid ester group, phosphoric acid ester group, acetic acid ester group, halogen atom and the like. L₁, L₂ and L₃ are the same or different. Among the compounds represented by the formulas (I), (II) and (III), preferred are those having sulfatoethylsulfonyl and mixtures of those having sulfatoethylsulfonyl and those having vinylsulfonyl as the fiber reactive group.

When unsubstituted or substituted lower alkyl is selected as any of R₁, R₂, R₃, R₈, R₉ and R₁₀, it is preferably unsubstituted or substituted alkyl having 1 to 4 carbon atoms. When the lower alkyl is substituted, the substituent is preferably hydroxy, cyano, alkoxy, alkoxycarbonyl, alkylcarbonyloxy, sulfo or sulfamoyl. Preferably, R₁, R₂, R₃, R₈, R₉ and R₁₀ are independently hydrogen, methyl, ethyl, n-propyl, isopropyl, n-butyl, iso-butyl, sec-butyl, 2-hydroxyethyl, 2-hydroxypropyl, 3-hydroxypropyl, 2-hydroxybutyl, 3-hydroxybutyl, 4-hydroxybutyl, 2,3-dihydroxypropyl, 3,4-dihydroxybutyl, cyanomethyl, 2-cyanoethyl, 3-cyanopropyl, methoxymethyl, ethoxymethyl, 2-methoxyethyl, 2-ethoxymethyl, 2-ethoxyethyl, 3-methoxypropyl, 3-ethoxypropyl, 2-hydroxy-3-methoxypropyl, chloromethyl, bromomethyl, 2-chloroethyl, 2-bromoethyl, 3-chloropropyl, 3-bromopropyl, 4-chlorobutyl, 4-bromobutyl, carboxymethyl, 2-carboxyethyl, 3-carboxypropyl, 4-carboxybutyl, 1,2-dicarboxyethyl, carbamoylmethyl, 2-carbamoylethyl, 3-carbamoylpropyl, 4-carbamoylbutyl, methoxycarbonylmethyl, ethoxycarbonylmethyl, 2-methoxycarbonylethyl, 2-ethoxycarbonylethyl, 3-methoxycarbonylpropyl, 3-ethoxycarbonylpropyl, 4-methoxycarbonylbutyl, 4-ethoxycarbonylbutyl, methylcarbonyloxymethyl, ethylcarbonyloxymethyl, 2-methylcarbonyloxyethyl, 2-ethylcarbonyloxyethyl, 3-methylcarbonyloxypropyl, 4-methylcarbonyloxybutyl, 4-ethylcarbonyloxybutyl, sulfomethyl, 2-sulfoethyl, 3-sulfopropyl, 4-sulfobutyl, sulfamoylmethyl, 2-sulfamoylethyl, 3-sulfamoylpropyl, 4-sulfamoylbutyl, etc. Of these, hydrogen, methyl and ethyl are particularly preferred.

In the case where any of two or more of R₁, R₂, R₃, R₈, R₉ and R₁₀ are lower alkyl, they are the same or different.

The dioxazine compounds of the formulas (I) and (II) used in the invention include known compounds disclosed in, for example, JP-A-4-28769 and JP-A-1-185370, respectively. They can be produced according to the procedures described in the description of these patents or analogous procedures thereof. On the other hand, the anthraquinone compounds of the formula (III), which include C. I. Reactive Blue 19, are known compounds disclosed in, for example, JP-A-60-108472.

The dioxazine and anthraquinone compounds contained in the reactive dye composition of the present invention each exist in the form of a free acid or a salt thereof. Preferably, they are in the form of alkali metal salt or alkaline earth metal salt, and particularly preferably in the form of sodium salt or lithium salt.

The reactive dye composition of the present invention preferably comprises a mixture of at least one dioxazine compound of formula (I) and at least one dioxazine compound of formula (II). Although the compounding ratio thereof is not particularly limited, the amount in weight basis of one dioxazine compound is preferably up to 100 times and more preferably up to 75 times that of the other dioxazine compound. In the present invention, it is preferred that the amount in weight basis of the dioxazine compound of the formula (II) is preferably from 0.05 to 100 times and more preferably from 0.2 to 20 times that of the dioxazine compound of the formula (I).

The compounding ratio of at least one dioxazine compound of the formula (I), or at least one dioxazine compound of the formula (II) or a mixture of the dioxazine compounds of the formulas (I) and (II) to at least one anthraquinone compound of the formula (III) is not particularly limited. The amount in weight basis of the anthraquinone compound (III) is preferably from 0.01 to 90 times and more preferably from 0.05 to 50 times that of any one of the dioxazine compound (I) or/and (II).

A method for blending at least one dioxazine compound (I) or (II) or the mixture of the dioxazine compounds (I) and (II) with at least one anthraquinone compound (III) is not particularly limited. The blending may be carried out either prior to or in the course of dyeing of the fiber materials.

In order to obtain a desired color, the reactive dye composition of the present invention can be used in combination with at least one of other blue color components and yellow and red color components. The blue, yellow and red color components to be mixed with the present reactive dye composition are not particularly limited. Any known reactive dyes may be used for this purpose. The usable reactive dyes include those having one or more reactive groups selected from sulfatoethylsulfone group, vinylsulfone group, monochlorotriazine group, dichlorotriazine group, monofluorotriazine group, mononicotiniotriazine group, monocarbamoylpyridiniotriazine group and difluoromonochloropyrimidine group. Many of those are marketed under the commercial name of Sumifix, Sumifix Supra, Remazol, Levafix, Procion, Cibacron, Basilen, Drimarene, Kayacion, Kayacelon React. etc. and disclosed in, for example, JP-A-50-178, 56-9483, 56-15481, 56-118976, 56-128380, 57-2365, 57-89679, 57-143360, 59-15451, 58-191755, 59-96174, 59-161463, 60-6754, 60-123559, 60-229957, 60-260654, 61-155469, 63-77974, 63-225665 and 3-770.

The reactive dye composition of the present invention may contain an inorganic salt such as anhydrous sodium sulfate or sodium chloride, a dispersant, a solubility improver, a dusting inhibitor, a pH stabilizer, a sequestering agent such as polyphosphate, an antifoaming agent, water and other known dyeing assistants.

The reactive dye composition of the present invention is not particularly limited in its form. It may have a known form such as powder, granule and liquid.

The cellulose fiber materials to which the reactive dye composition of the present invention is applied are not particularly limited. They include natural and regenerated cellulose fibers such as cotton, linen, flax, jute, ramie fiber, viscose rayon, Bemberg fiber and the like. The cellulose fiber-containing fiber materials include cotton/polyester union fabric, cotton/nylon union fabric, cotton/wool, cotton/silk union fabric, and the like.

In the present invention, the dyeing can be carried out by known methods including, for example, exhaustion dyeing, continuous dyeing, cold-pad-batch dyeing and printing methods. As the exhaustion dyeing, a method which comprises using a known inorganic neutral salt such as anhydrous sodium sulfate, sodium chloride or the like and a known acid binding agent can be referred to. The acid binding agent suitable for fixing the dye on cellulose fiber is, for example, a water-soluble basic salt formed between an alkali metal or alkaline earth metal and an inorganic salt, an organic acid or a compound releasing an alkali upon heating. Preferable acid binding agents are alkali metal hydroxides and alkali metal salts of inorganic or organic acid having a weak or medium acidity. Of these, sodium salts and potassium salts are particularly preferred. Specific examples of such acid binding agent are sodium hydroxide, potassium hydroxide, sodium bicarbonate, sodium carbonate, sodium formate, potassium carbonate, sodium primary, secondary and tertiary phosphates, sodium silicate, sodium trichloroacetate, and liquid acid binding agents marketed under the trade names of Espolon A-171, Contron-L, BLENON, AM-117, etc. There is no limitation on the amounts of the inorganic neutral salt and acid binding agent. Usually, the inorganic neutral salt can be used in an amount of at least 1 g/liter. Although it may be used in an amount of 100 g/liter or more, a small amount of 40 g/liter or less may be enough to carry out the dyeing in the present invention, because the present dye composition is not so sensitive against change of the salt concentration. The inorganic neutral salt and acid binding agent may be fed into the dyeing bath either in one portion or in portions in the conventional manner. Further, dosing may be carried out by a mechanical control. Dyeing assistants such as level dyeing agents, retarding agents, dye bath lubricants and the like may be used according to known methods. The dyeing temperature is usually 40-90°C and preferably 40-70°C.

The reactive dye composition of the present invention is used for dyeing a cellulose fiber material or a cellulose fiber-containing fiber material to obtain a dyed product having neither unevenness nor dyeing spot with excellent reproducibility. In accordance with the present invention, a dyed product of high color yield can be obtained even with a small amount of inorganic neutral salts. Further, the reactive dye composition of the present invention is robust against changes in dyeing temperature, amount of the acid-binding agent and liquor ratio. Furthermore, the reactive dye composition of the present invention is excellent in build-up property, and can produce a dyed product of a clear blue color excellent in light fastness, perspiration-light fastness and wet fastness.

The present invention will be explained in more detail by referring to the following examples, which are only illustrative. In the examples, percent is by weight.

### Example 1

In a wince dyeing machine was set 100 kg of a knit cotton fabric. The liquor ratio and water temperature were adjusted to 1:15 and 60°C, respectively.

Then, 0.06 kg of a dye represented by formula (1) in the free acid form: 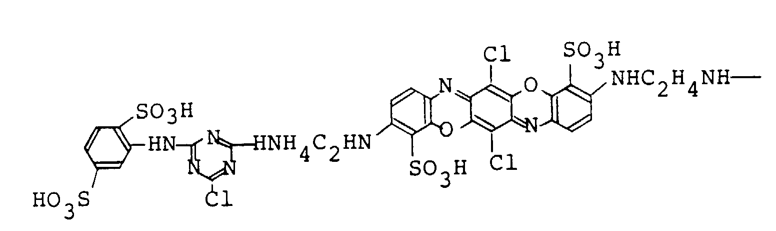 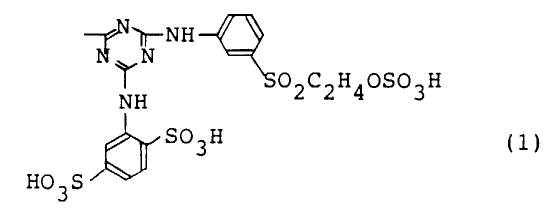 which had been dissolved previously, 0.54 kg of a dye represented by formula (2) in the free acid form: 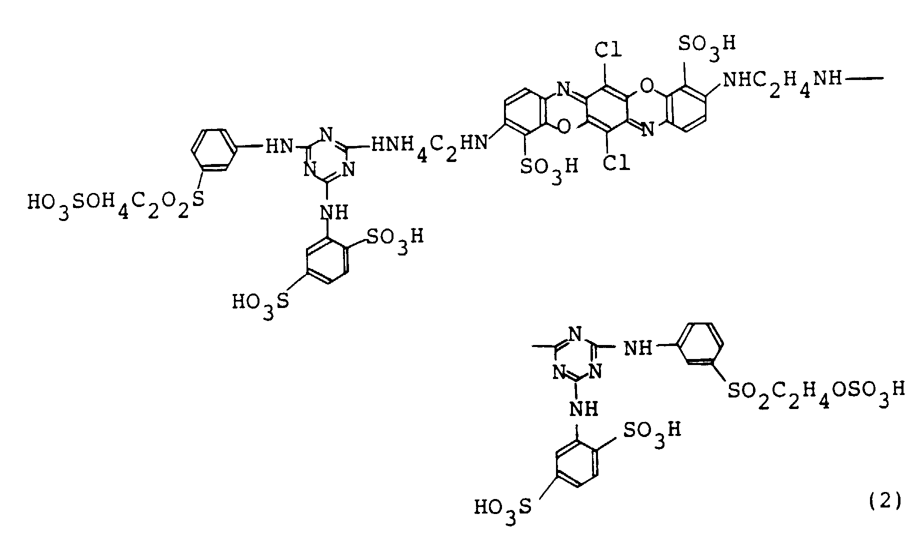 which had been dissolved previously, and 2.4 kg of a dye represented by formula (3) in the free acid form: 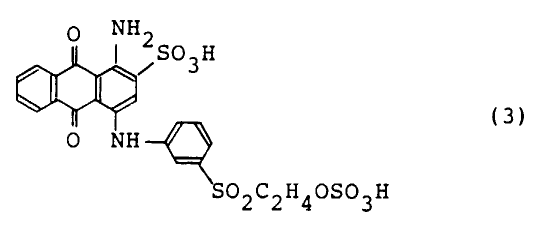 which had been dissolved previously were thrown into the bath in the conventional manner. Further, 45 kg of anhydrous sodium sulfate was thrown into the bath at this temperature. After treating the knit fabric at this temperature for 20 minutes, 30 kg, in the total, of sodium carbonate was added to the bath in two portions in the conventional manner. Then, the knit fabric was treated at this temperature for 60 minutes to complete the dyeing. The dyed product thus obtained showed a spotless, uniform and clear blue color. When the above-mentioned dyeing process was repeated, a good reproducibility of dyeing was exhibited.

### Example 2

In a low liquor ratio type liquid flow dyeing apparatus was set 200 kg of a knit fabric made of rayon fiber, and the liquor ratio and water temperature were adjusted to 1:6 and 60°C, respectively.

Then, 0.05 kg of a dye represented by formula (4) in the free acid form: 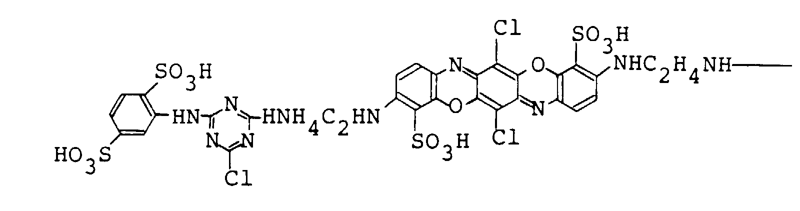 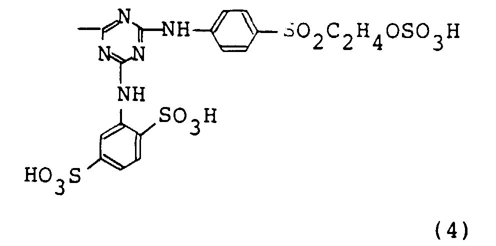 which had been dissolved previously, 0.32 kg of a dye represented by formula (5) in the free acid form: 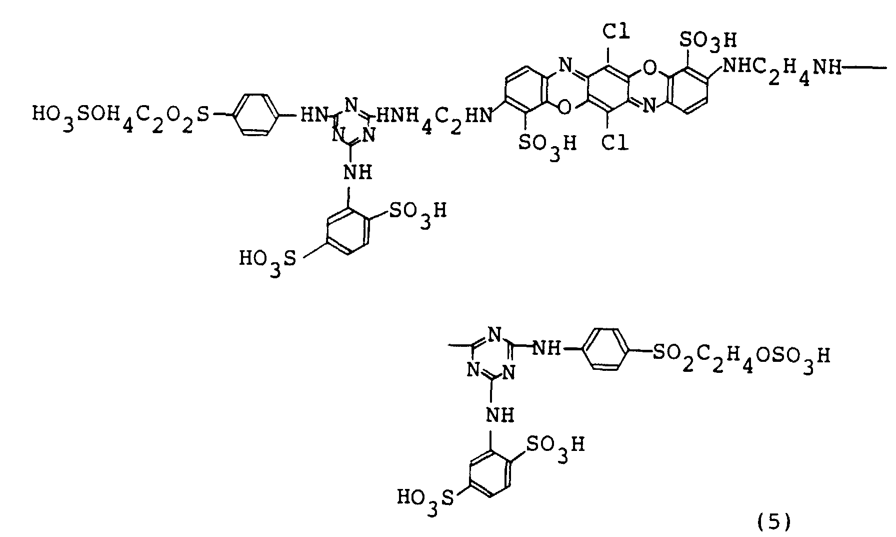 which had been dissolved previously, 2.63 kg of a dye represented by formula (6) in the free acid form: 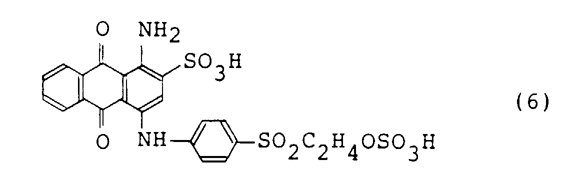 which had been dissolved previously, and 18 kg of anhydrous sodium sulfate were thrown into the bath in the conventional manner. After treating the knit fabric at this temperature for 30 minutes, 4.8 kg of sodium carbonate was thrown into the bath in the conventional manner. Then, the knit fabric was treated at this temperature for 40 minutes to complete the dyeing process. At this time, no undissolved matter such as dye agglomerate and the like was found in the bath, and the dyed product thus obtained showed a spotless, uniform and clear blue color. When the dyeing process mentioned above was repeated, a good reproducibility of dyeing was exhibited.

### Example 3

One hundred kilograms of cotton yarn was set in a cheese dyeing apparatus, and liquor ratio and water temperature were adjusted to 1:10 and 65°C, respectively.

Then, 1.0 kg of a dye represented by formula (7) in the free acid form: 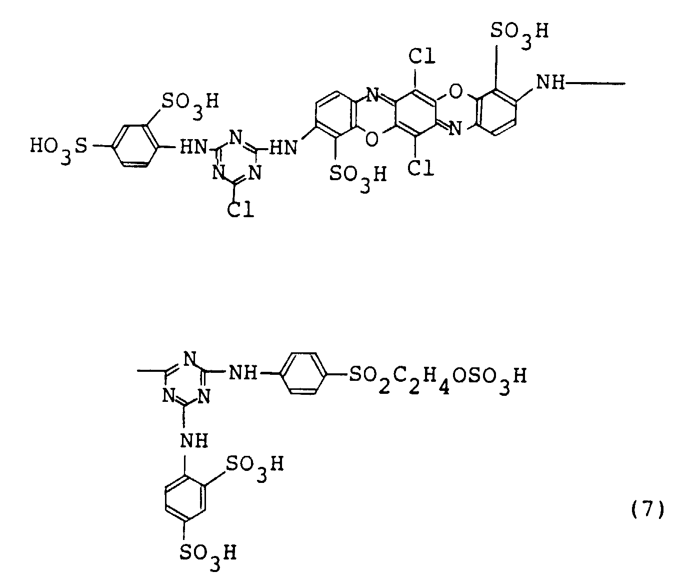 which had been dissolved previously, 1.0 kg of a dye represented by formula (8) in the free acid form: 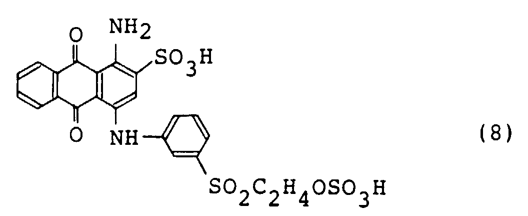 which had been dissolved previously, 1.5 kg of a yellow-colored dye represented by formula (9) in the free acid form: 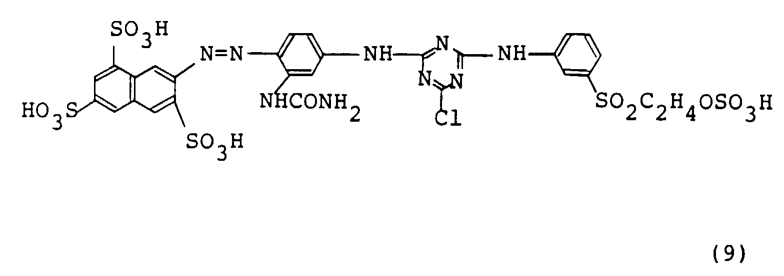 which had been dissolved previously, 1 kg of a red-colored dye represented by formula (10) in the free acid form: 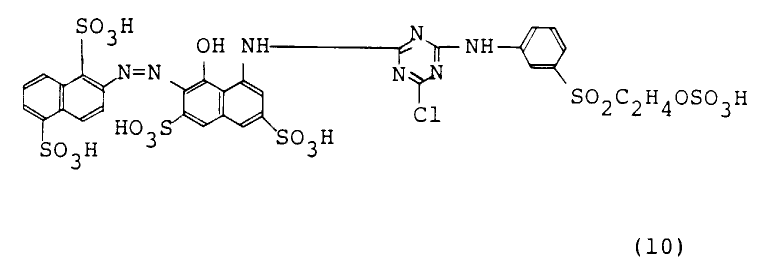 which had been dissolved previously and 30 kg of sodium chloride were thrown into the bath in the conventional manner. After treating the yarn at this temperature for 30 minutes, 10 kg of sodium tertiary phosphate was added to the bath in the conventional manner. Then, the yarn was treated at the same temperature as above for 60 minutes to complete the dyeing. The dyed product thus obtained showed a spotless, uniform and clear brown color. When the above-mentioned dyeing process was repeated, reproducibility of dyeing was good.

### Example 4

In a high pressure liquid flow type dyeing apparatus was set 200 kg of a union knit fabric constituted of 50% of cotton fiber and 50% of polyester fiber. Liquor ratio was adjusted to 1:10, water temperature was adjusted to 80°C, and pH was adjusted to 5 with acetic acid. Then, 0.4 kg of a disperse dye represented by formula (11): 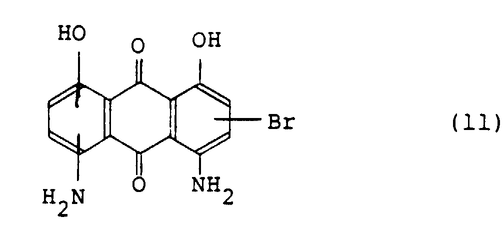 which had sufficiently been dispersed in water previously, and 0.5 kg of a disperse dye represented by formula (12): 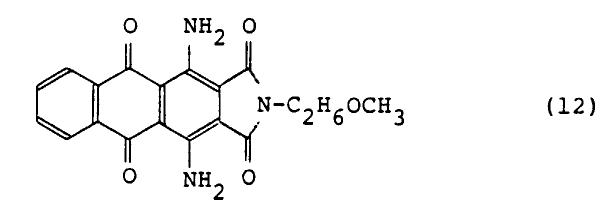 which had sufficiently been dispersed in water previously, were added to the bath together with a dispersant solution containing 0.2 kg of a dispersant (Sumipon TF, manufactured by Sumitomo Chemical Co.). The mixture was heated to 130°C in 40 minutes, and the polyester part of the knit fabric was dyed at this temperature for 30 minutes. Then, the dye solution was discharged, fresh water was fed, and the liquor ratio and water temperature were adjusted to 1:10 and 60°C, respectively. Then, 0.1 kg of a dye represented by formula (1) in the free acid form which had been dissolved previously, 0.4 kg of a dye represented by formula (2) in the free acid form which had been dissolved previously, 1.0 kg of a dye represented by formula (3) in the free acid form which had been dissolved previously and 60 kg of anhydrous sodium sulfate were added to the bath at the same temperature as above, and the fabric was treated at this temperature for 45 minutes to complete the dyeing. As a result, a good dyed product was obtained, and it showed a spotless, uniform and clear blue color. When the above-mentioned dyeing was repeated, reproducibility of dyeing was good.

### Example 5

One hundred kilograms of a knit cotton fabric was set in a wince dyeing apparatus, and liquor ratio and water temperature were adjusted to 1:15 and 50°C, respectively. On the other hand, 1.0 kg of a dye represented by formula (13) in the free acid form: 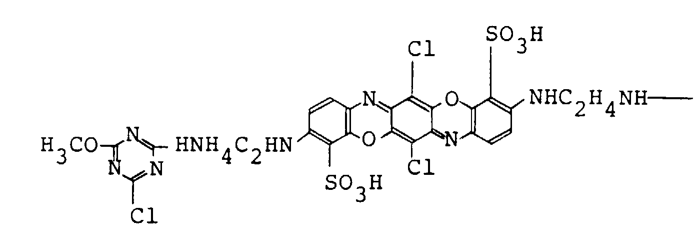 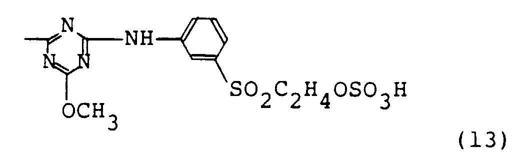 and 9.0 kg of a dye represented by formula (14) in the free acid form: 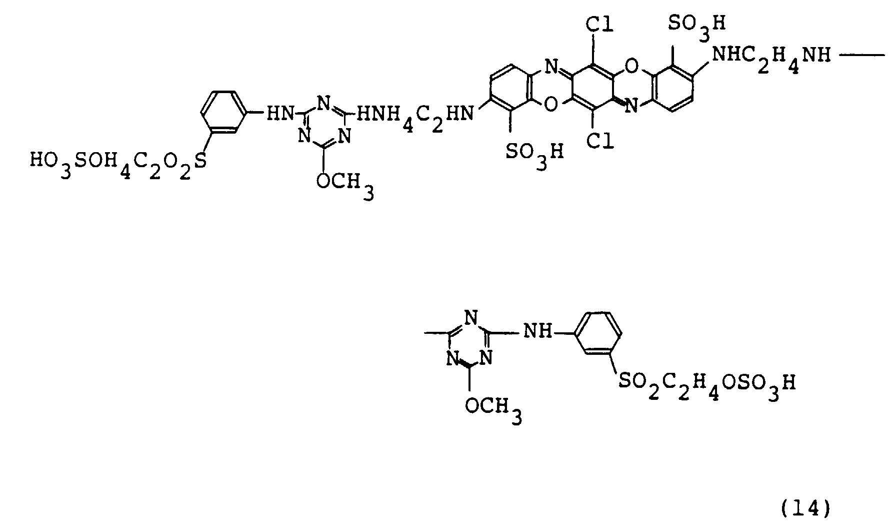 and 90.0 kg of a dye represented by formula (3) in the free acid form were thoroughly mixed together, and 1.0 kg of the dye composition thus obtained was dissolved in hot water and cooled to 25°C. The solution thus obtained was added to the bath together with 1.5 kg of a dye represented by formula (15) in the free acid form: 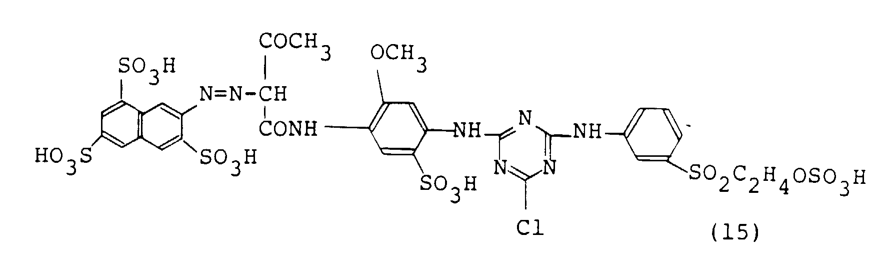 which had been dissolved previously, 3 kg of a dimethylnaphthalenesulfonic acid-formaldehyde condensate (sodium salt) having a sulfonation degree of 110% and an average condensation degree of 1.8 and 45 kg of anhydrous sodium sulfate in the conventional manner. After treating the knit fabric at the above-mentioned bath temperature for 20 minutes, 30 kg of sodium carbonate was added to the bath in the conventional manner. Then, the knit fabric was treated at the same temperature as above for 60 minutes to complete the dyeing. The dyed product thus obtained was finished by washing it in the conventional manner. The dyed product thus obtained showed a spotless, uniform, clear green color. When the dyeing process was repeated, the reproducibility of dyeing was good.

### Example 6

One hundred kilograms of a knit cotton fabric was set in a liquid flow type dyeing apparatus, and liquor ratio and water temperature were adjusted to 1:8 and 60°C, respectively. Then, 0.01 kg of a dye represented by formula (1) in the free acid form which had been dissolved previously, 0.72 kg of a dye represented by formula (2) in the free acid form which had been dissolved previously, 2.27 kg of a dye represented by formula (3) in the free acid form which had been dissolved previously and 20 kg of anhydrous sodium sulfate were added to the bath in the conventional manner, and the knit fabric was treated at this temperature for 20 minutes. After adding 4 kg of sodium carbonate to the bath in the conventional manner, the knit fabric was treated at that temperature for 15 minutes. Then, 1.6 liters of 40° Baumé caustic soda solution was added to the bath in the conventional manner, and the knit fabric was treated at the same temperature as above for 60 minutes to complete the dyeing. The dyed product was finished by washing it in the conventional manner. The dyed product thus obtained had a spotless, uniform and clear blue color. When the above-mentioned dyeing process was repeated, the reproducibility of dyeing was good.

### Example 7

One hundred kilograms of a knit cotton fabric was set in a wince dyeing machine, and the liquor ratio and water temperature were set to 1:15 and 60°C, respectively. After adding 0.6 kg of a dye represented by formula (2) in the free acid form which had been dissolved previously and 1.4 kg of a dye represented by formula (3) in the free acid form which had been dissolved previously to the bath in the conventional manner, 45 kg of anhydrous sodium sulfate was added to the bath in the conventional manner at this temperature. Then, the knit fabric was treated at the same temperature as above for 20 minutes. After adding 30 kg of sodium carbonate to the bath in the conventional manner, the knit fabric was treated at the same temperature as above for 60 minutes to complete the dyeing. The dyed product thus obtained had a spotless, uniform and clear blue color. When the above-mentioned dyeing process was repeated, the reproducibility of dyeing was good.

### Examples 8 to 45

Dyes were thoroughly mixed together at the compounding ratios shown in Tables 1 to 38. A 2.0 kg portion of each dye composition thus obtained was dissolved in hot water and the resulting solution was cooled to 25°C, with which a dyeing process was carried out by repeating the procedure of Example 1. The dyed products thus obtained all had a spotless, uniform and clear blue color. When the dyeing processes were repeated, the reproducibility of dyeing was good in all the cases.

In the tables, the mark ∗ in the columns of X₁ and X₂ signifies a bond linking to 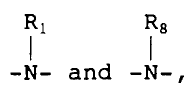 respectively, the mark ** in the column of Y₁ signifies a bond linking to Z₁, and the mark *** in the column of Y₂ signifies a bond linking to Z₂ and Z₃.

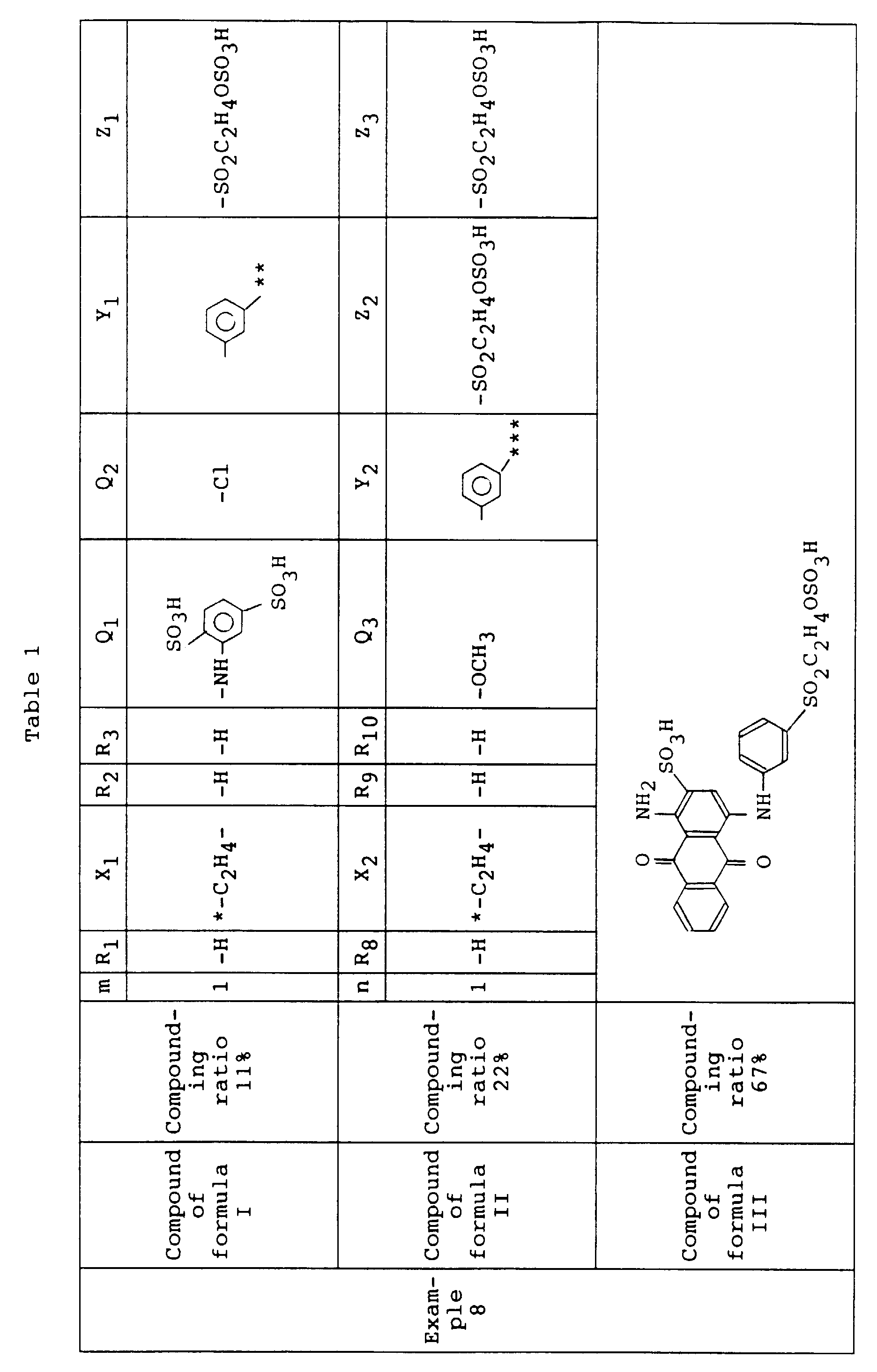

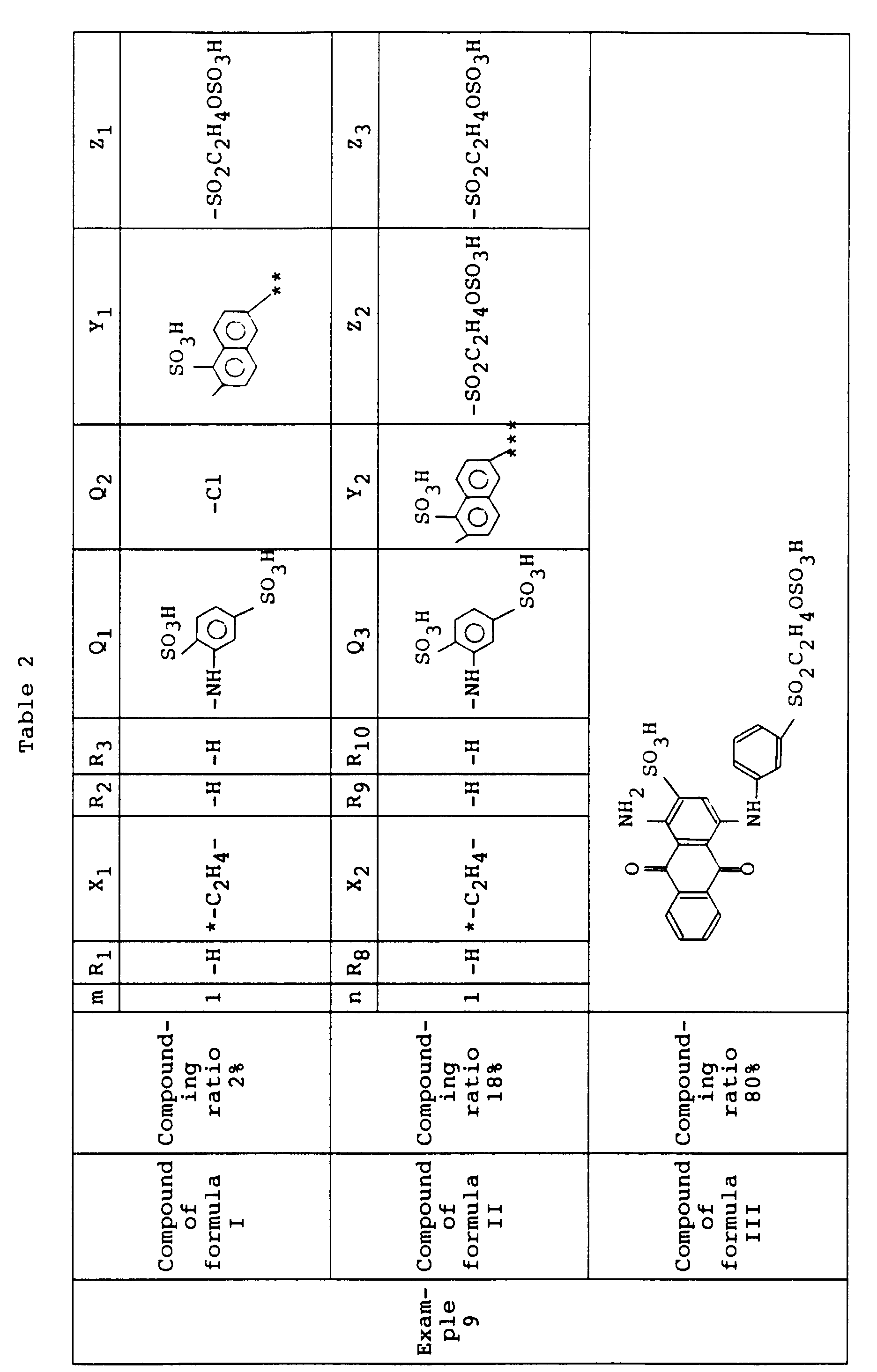

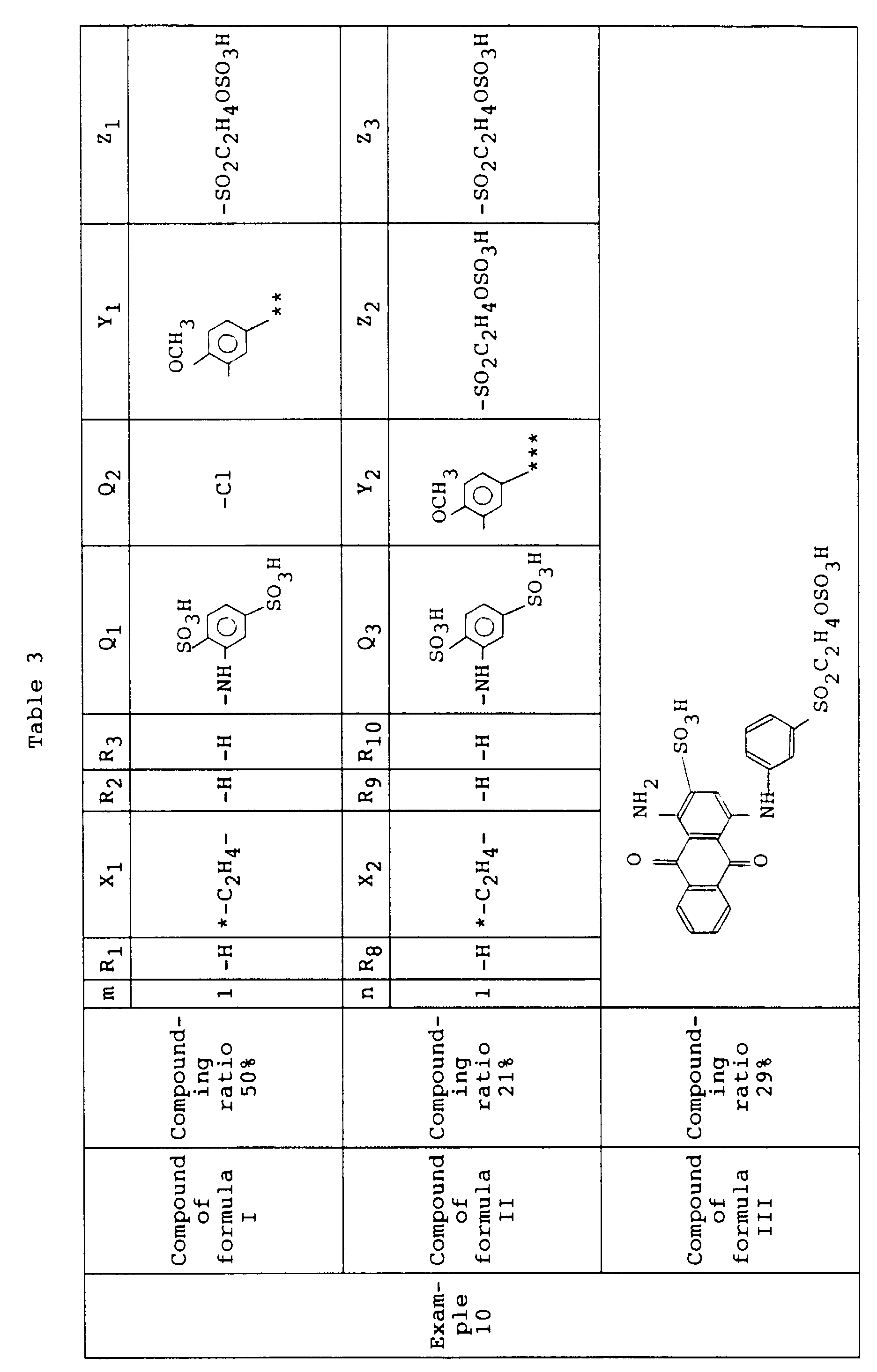

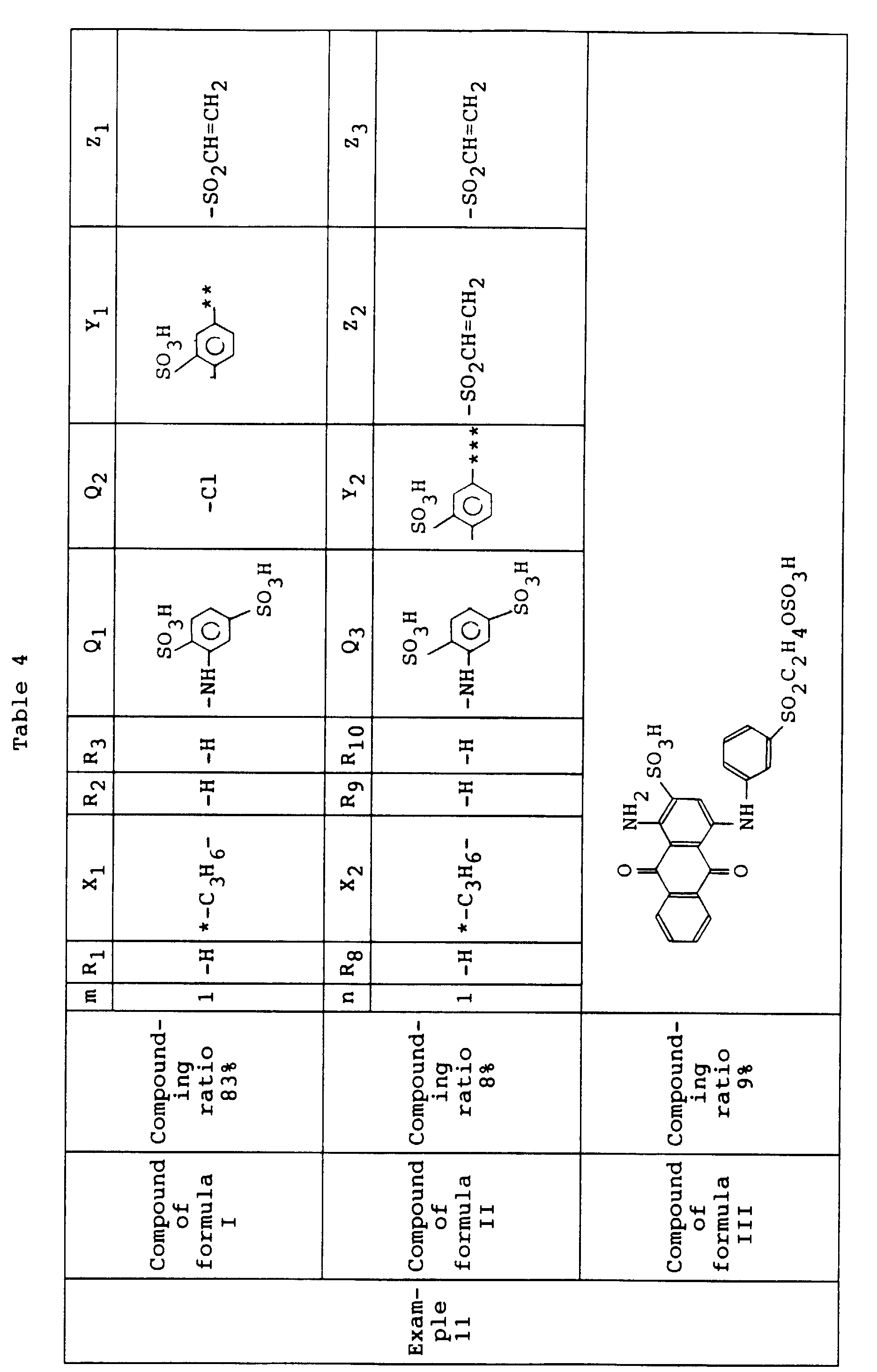

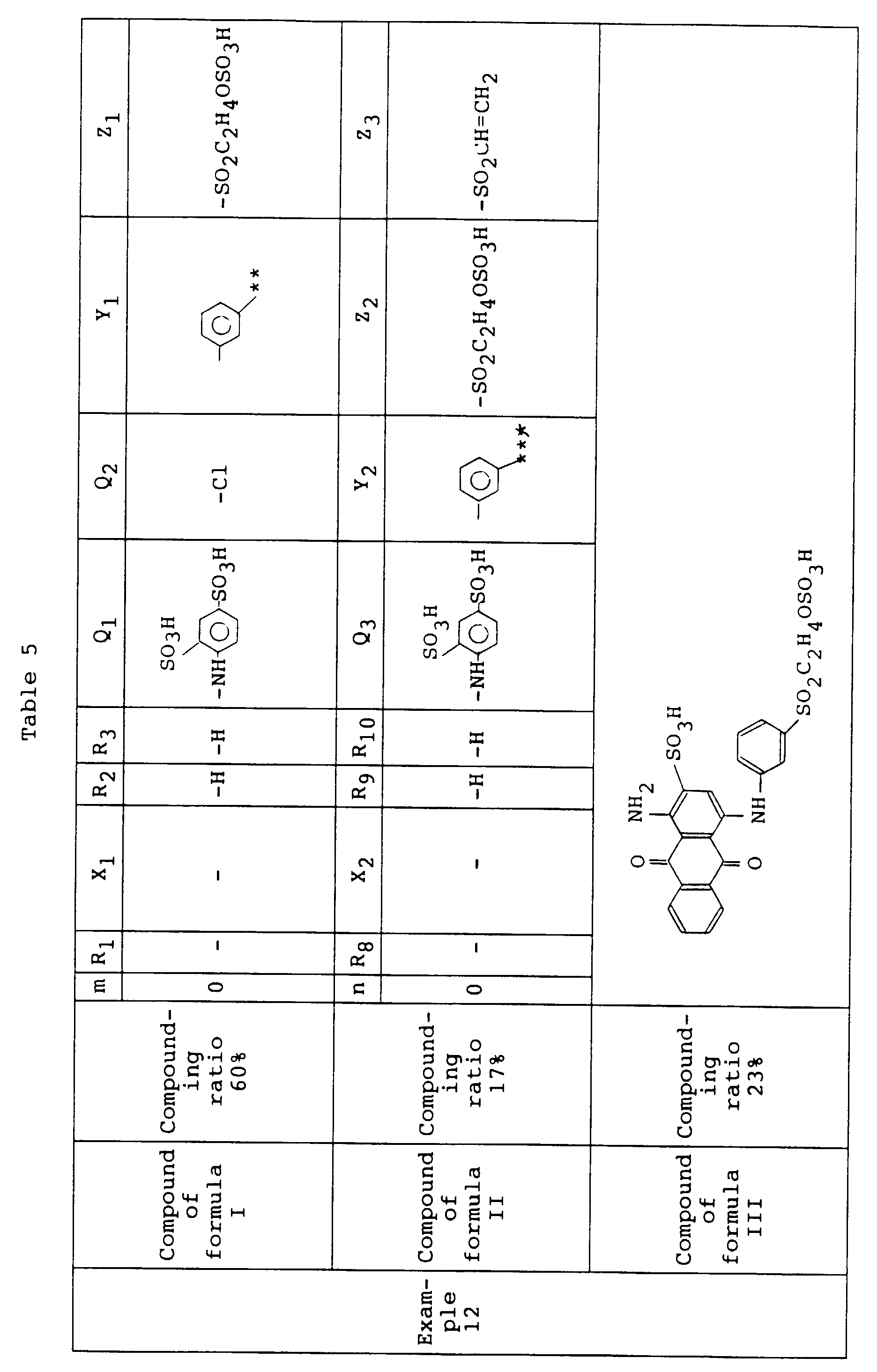

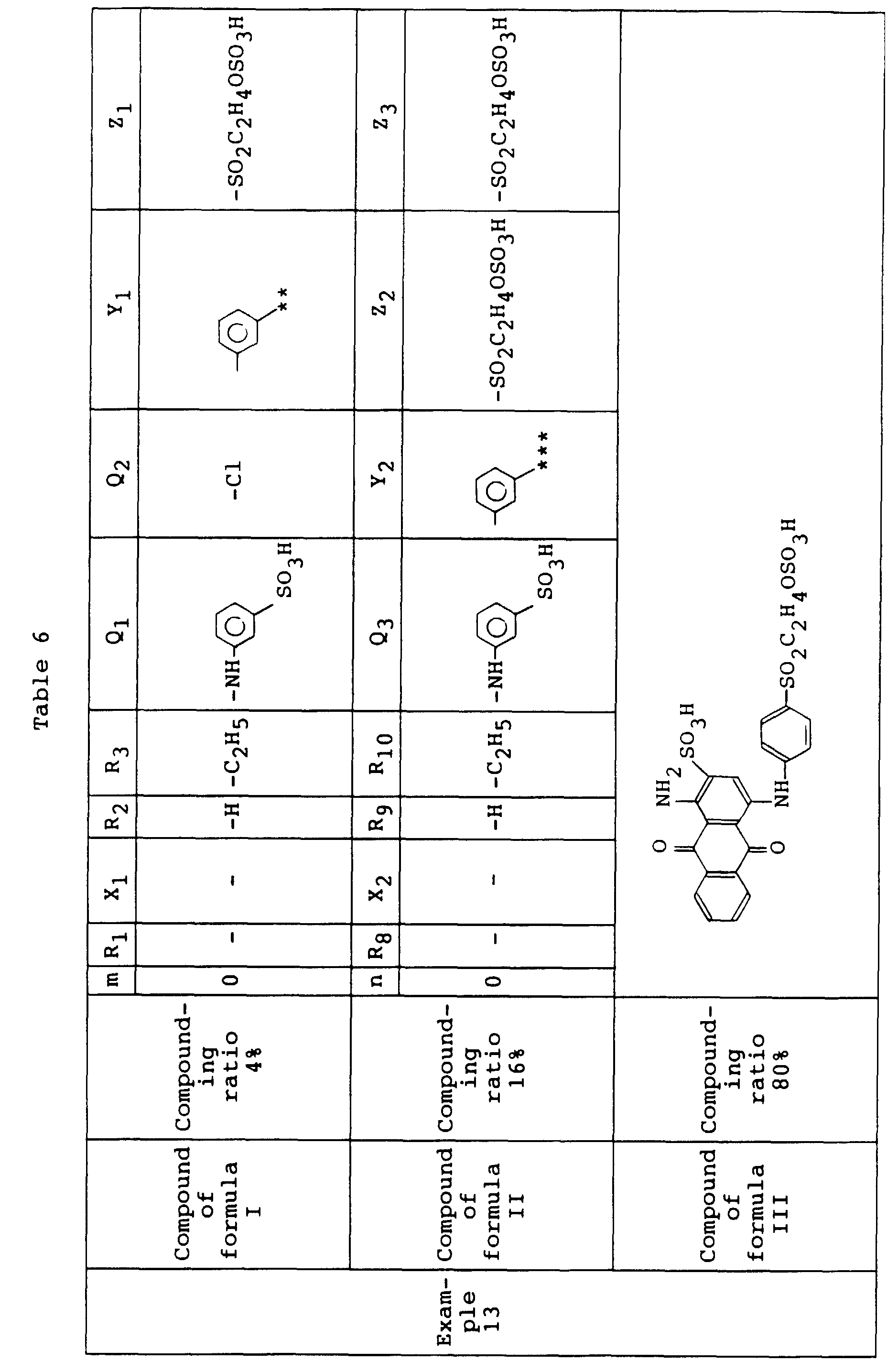

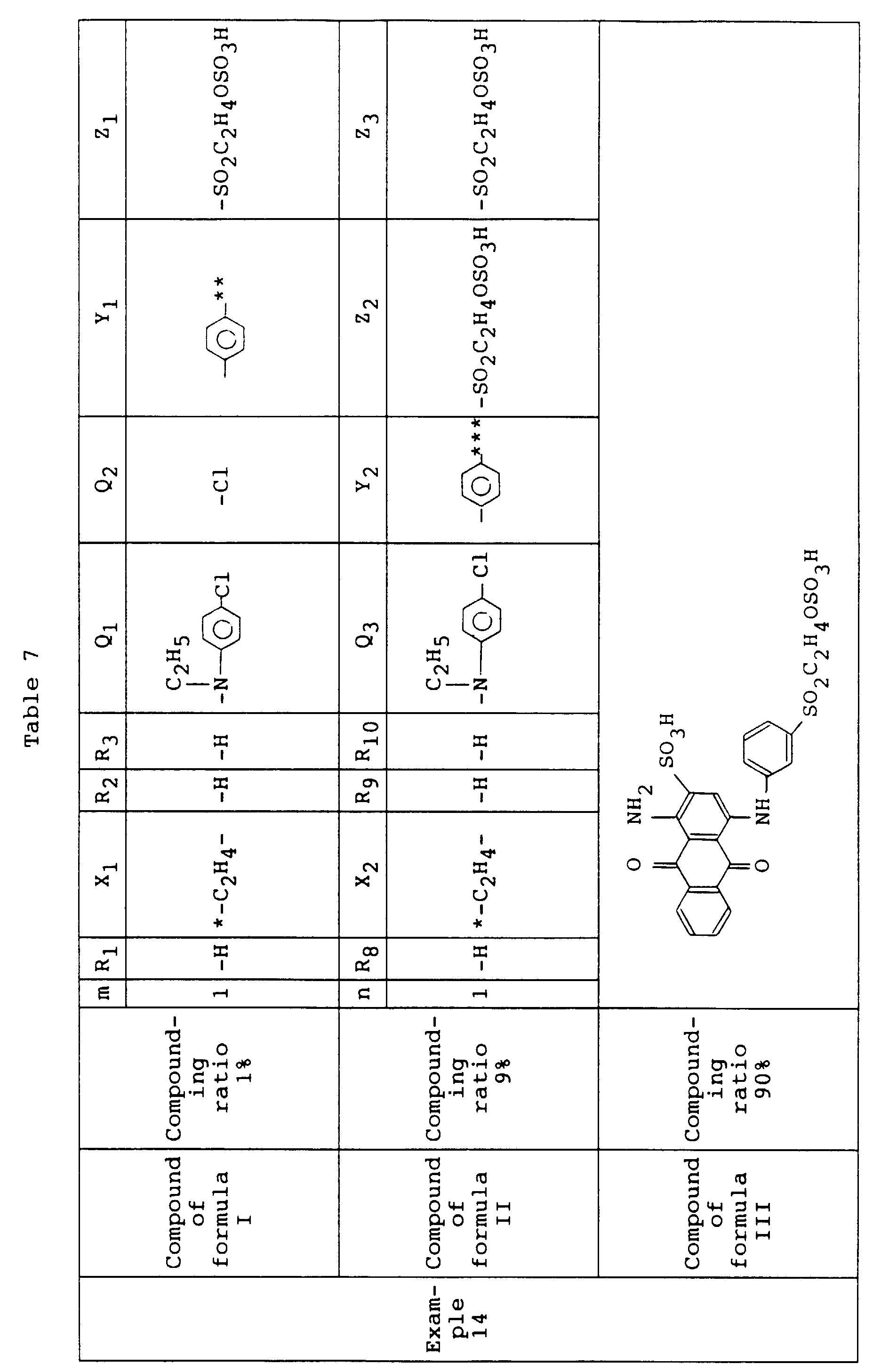

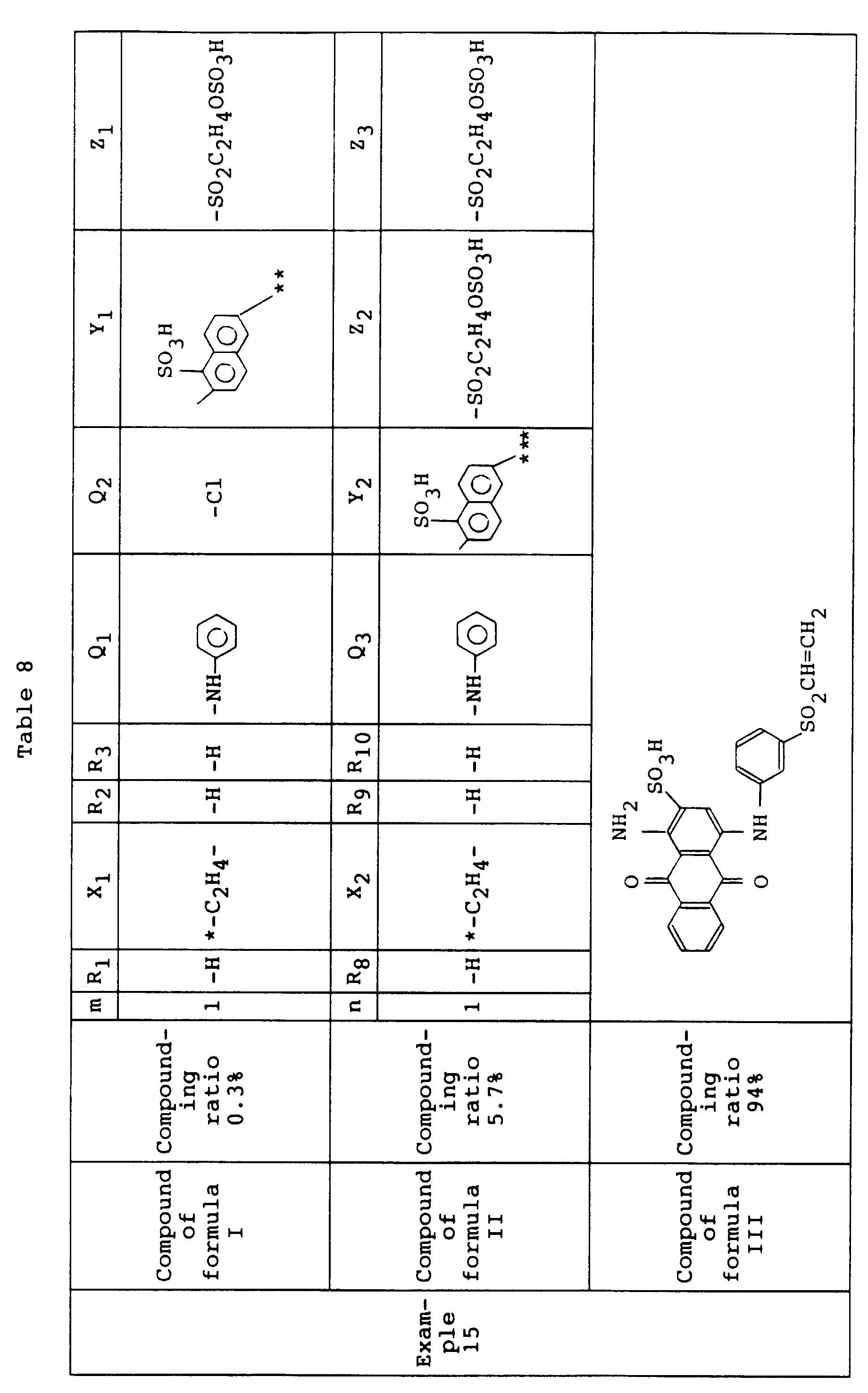

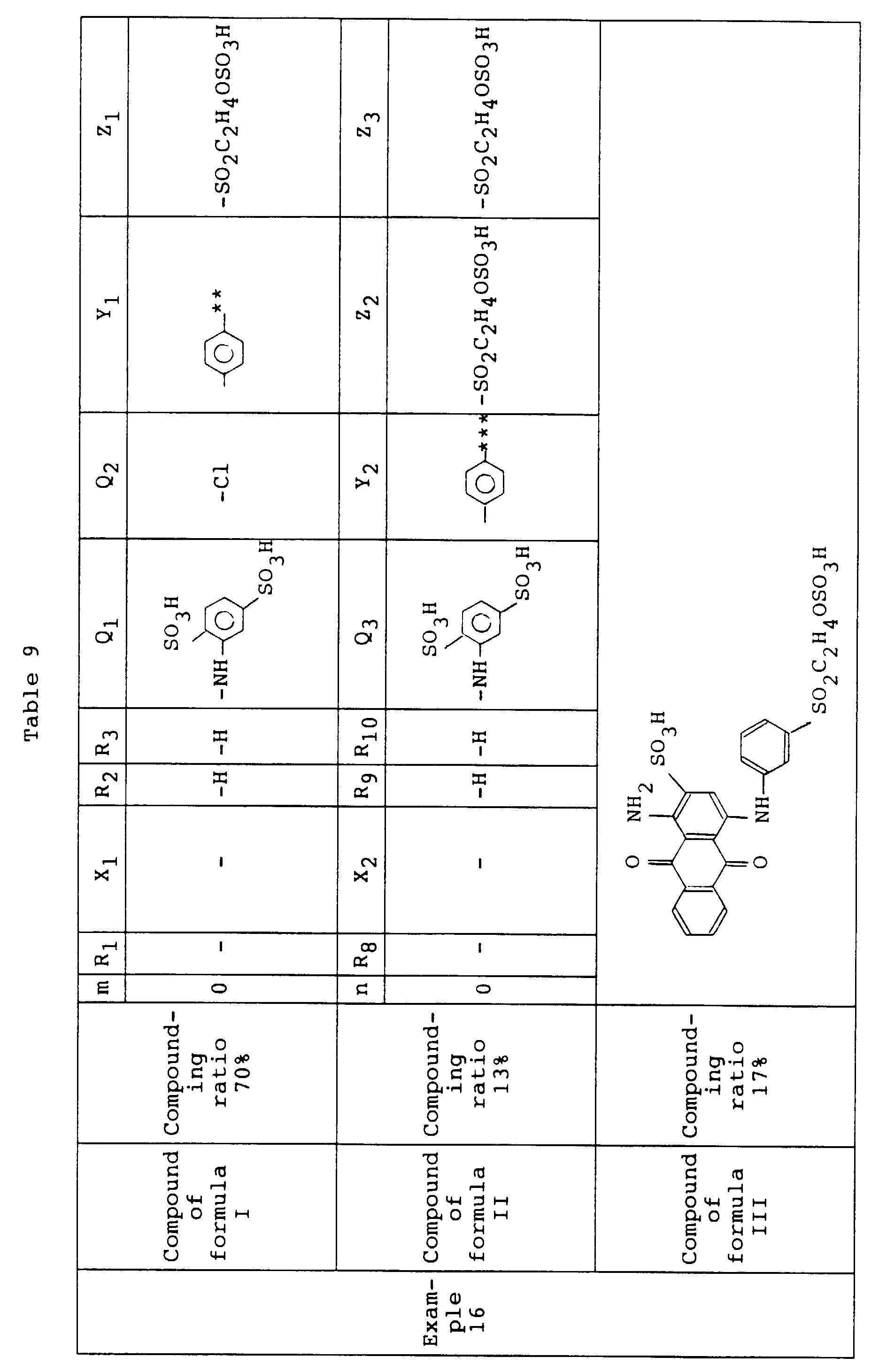

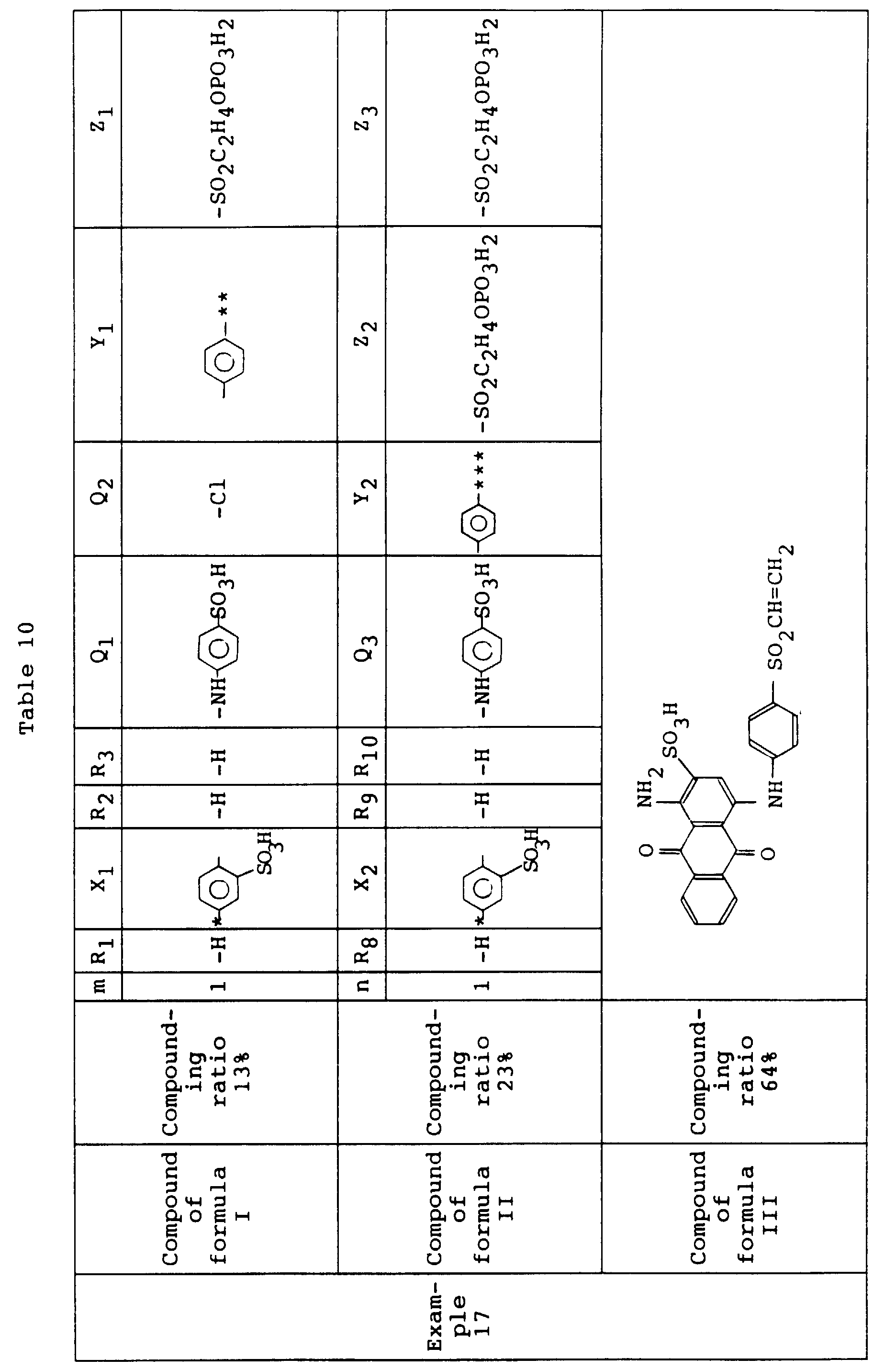

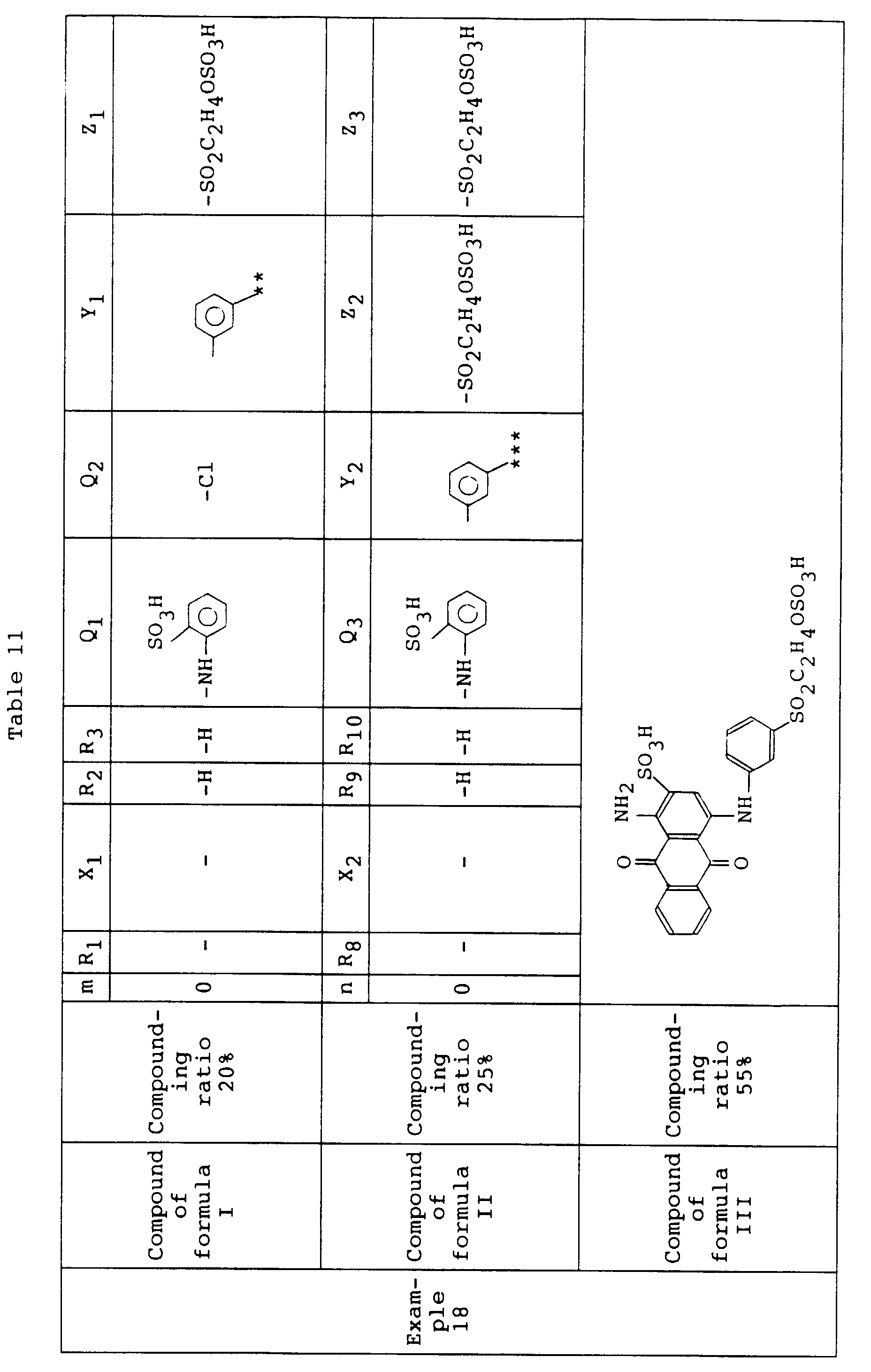

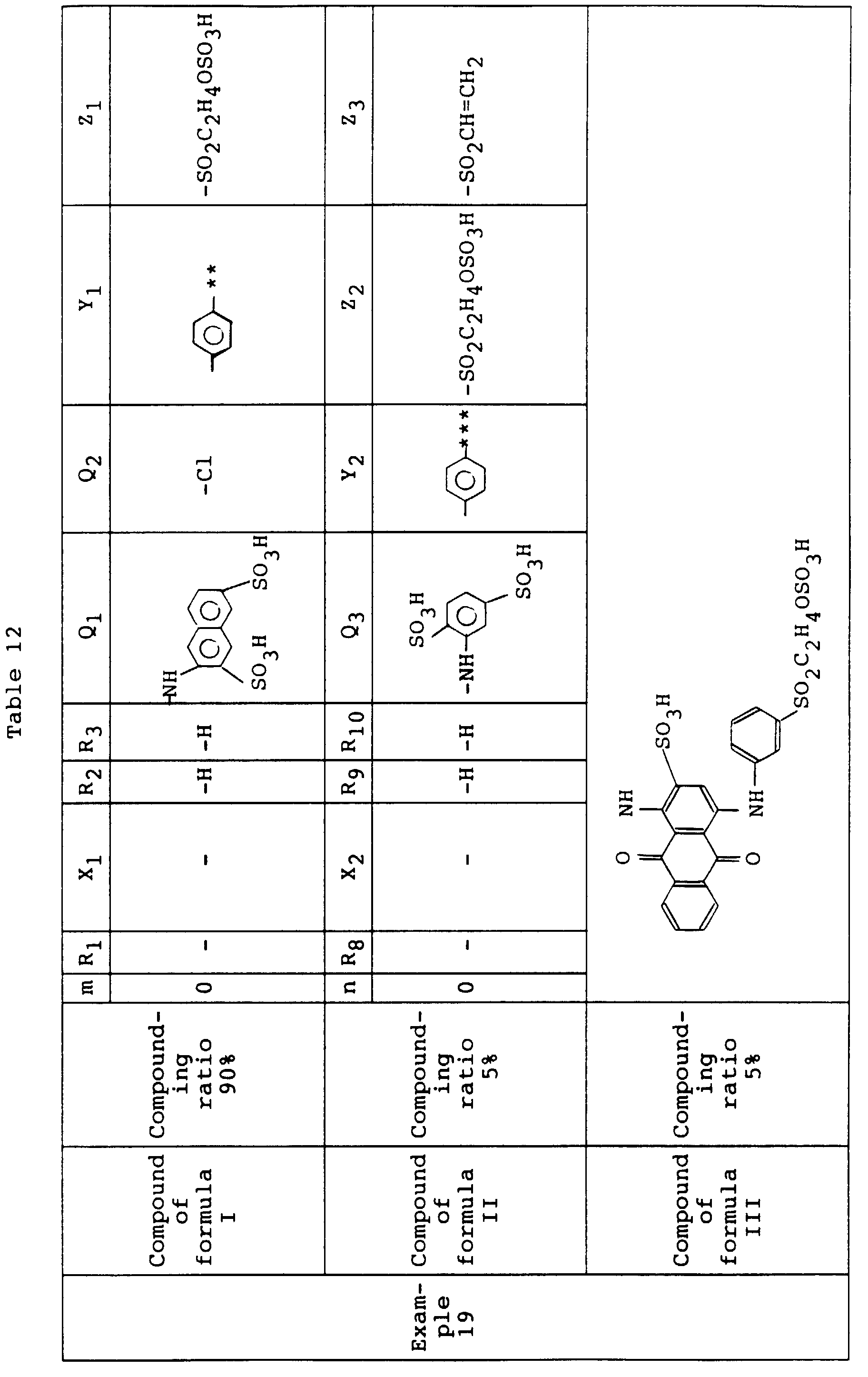

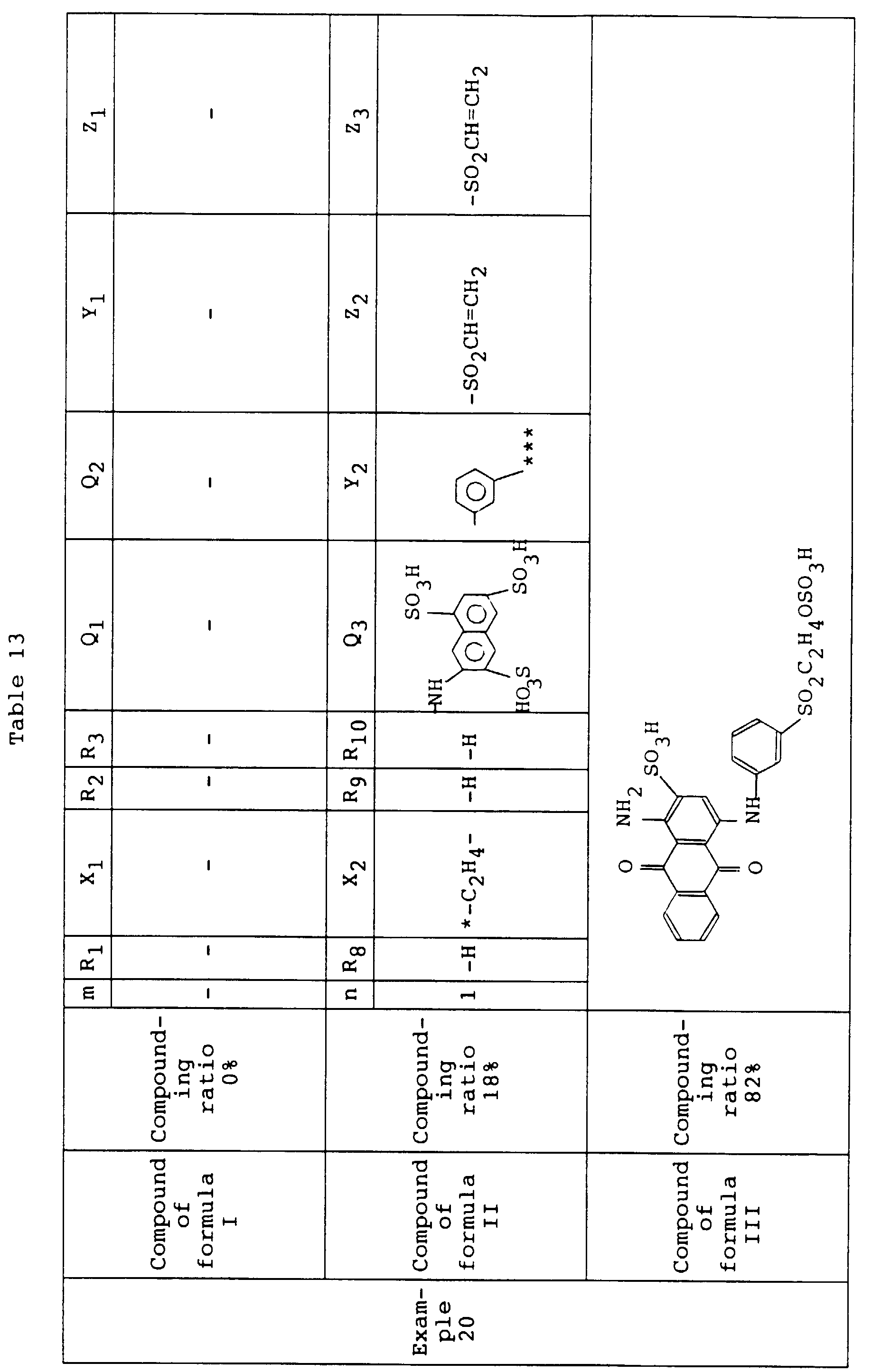

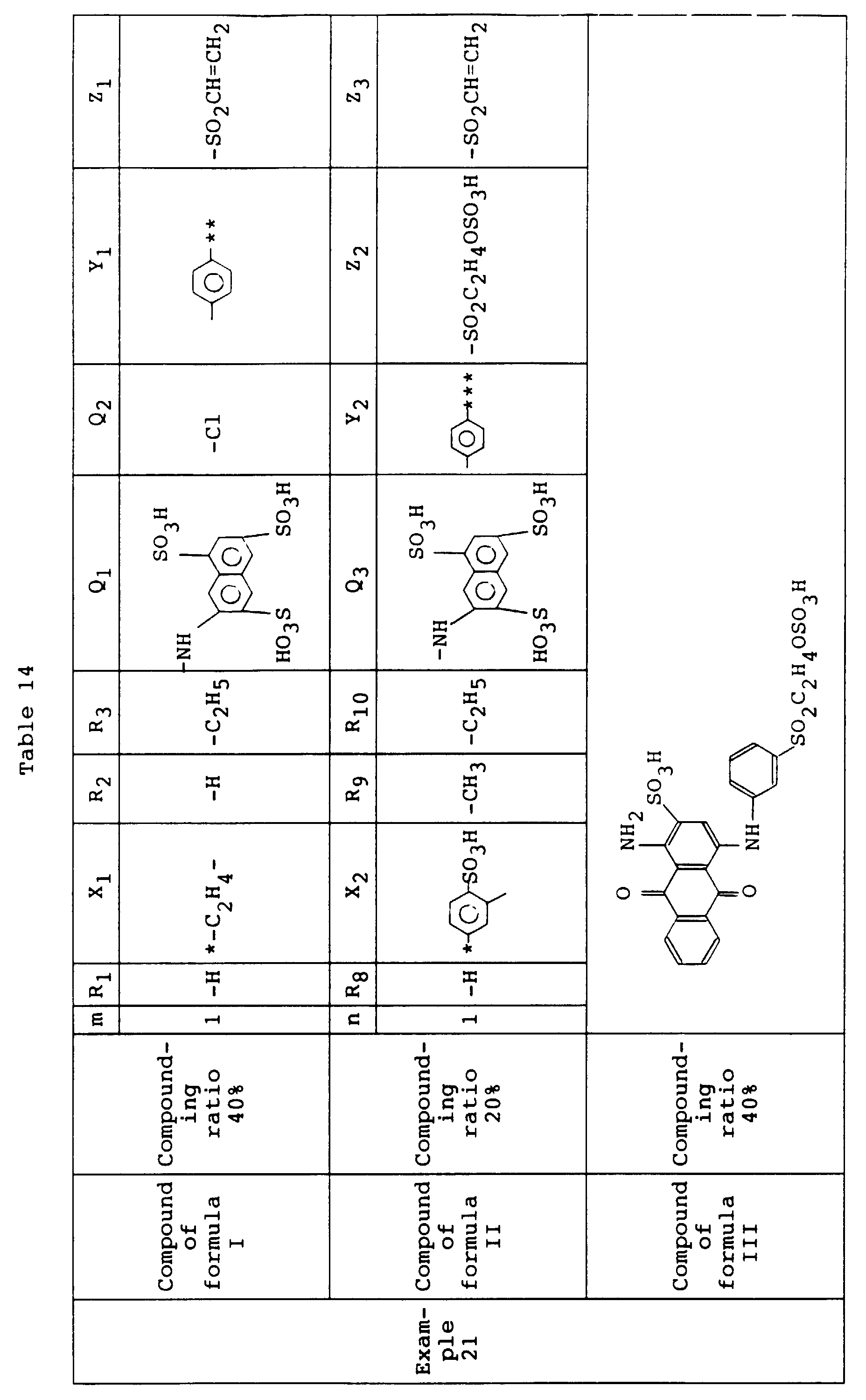

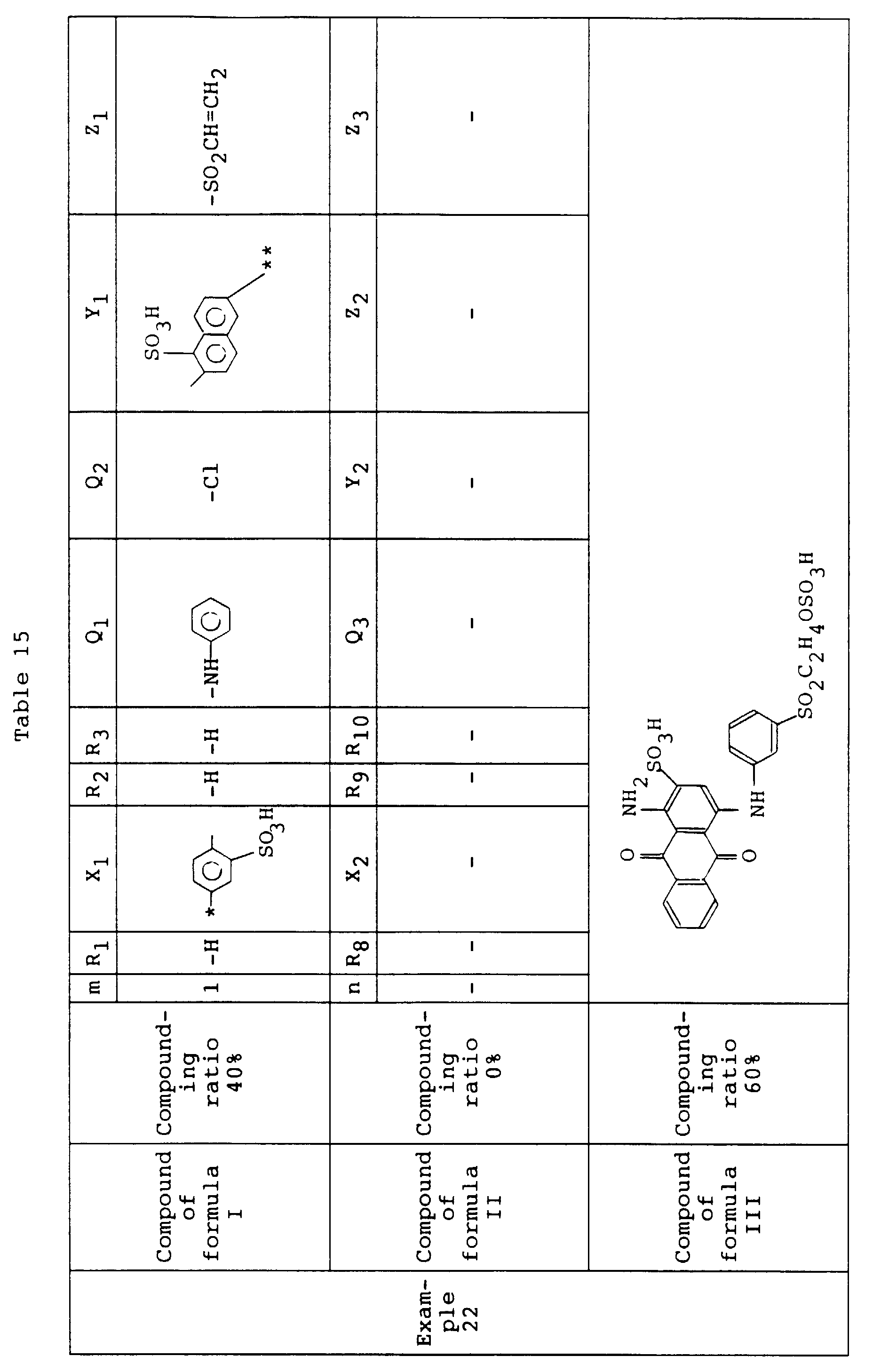

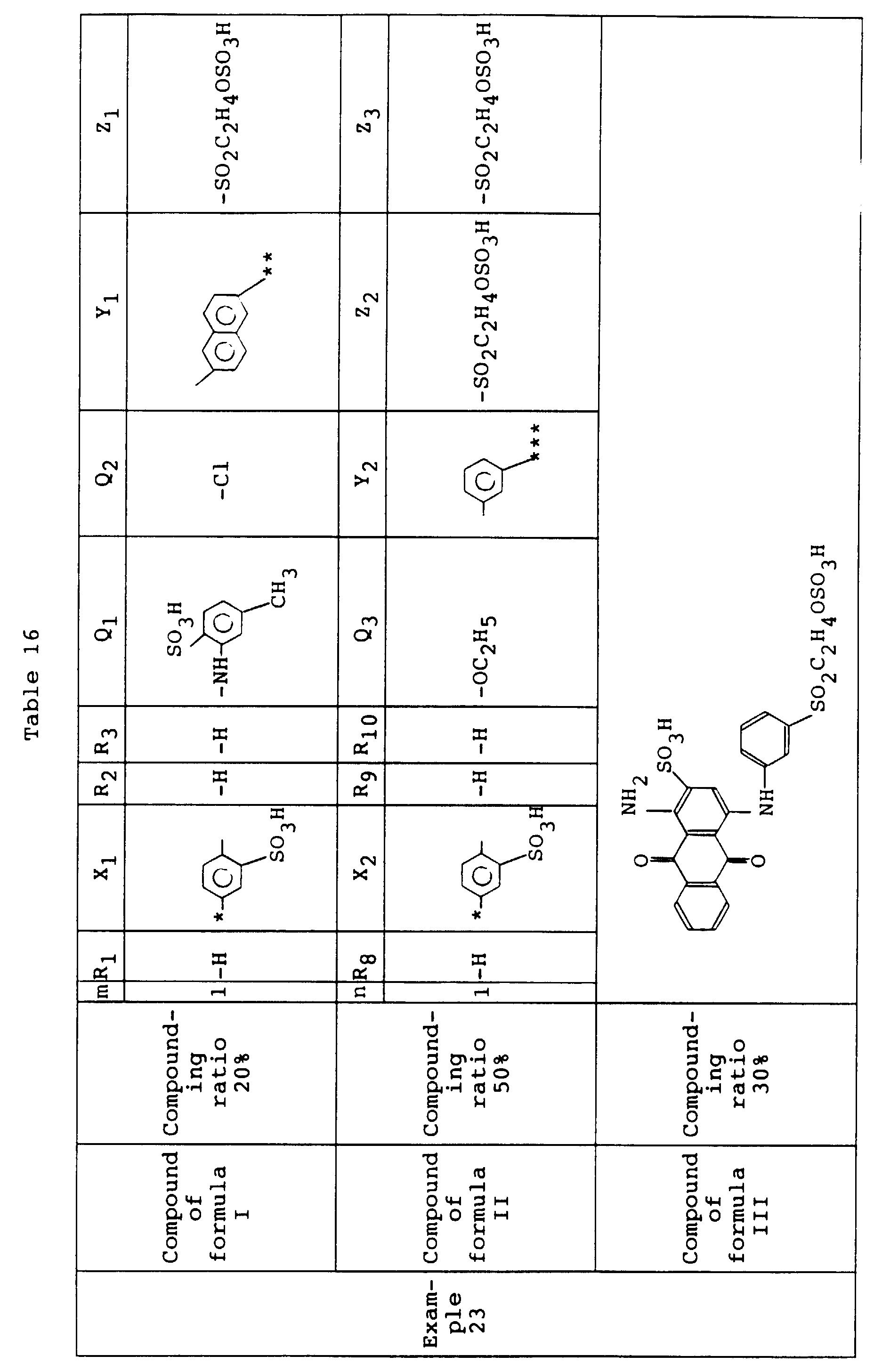

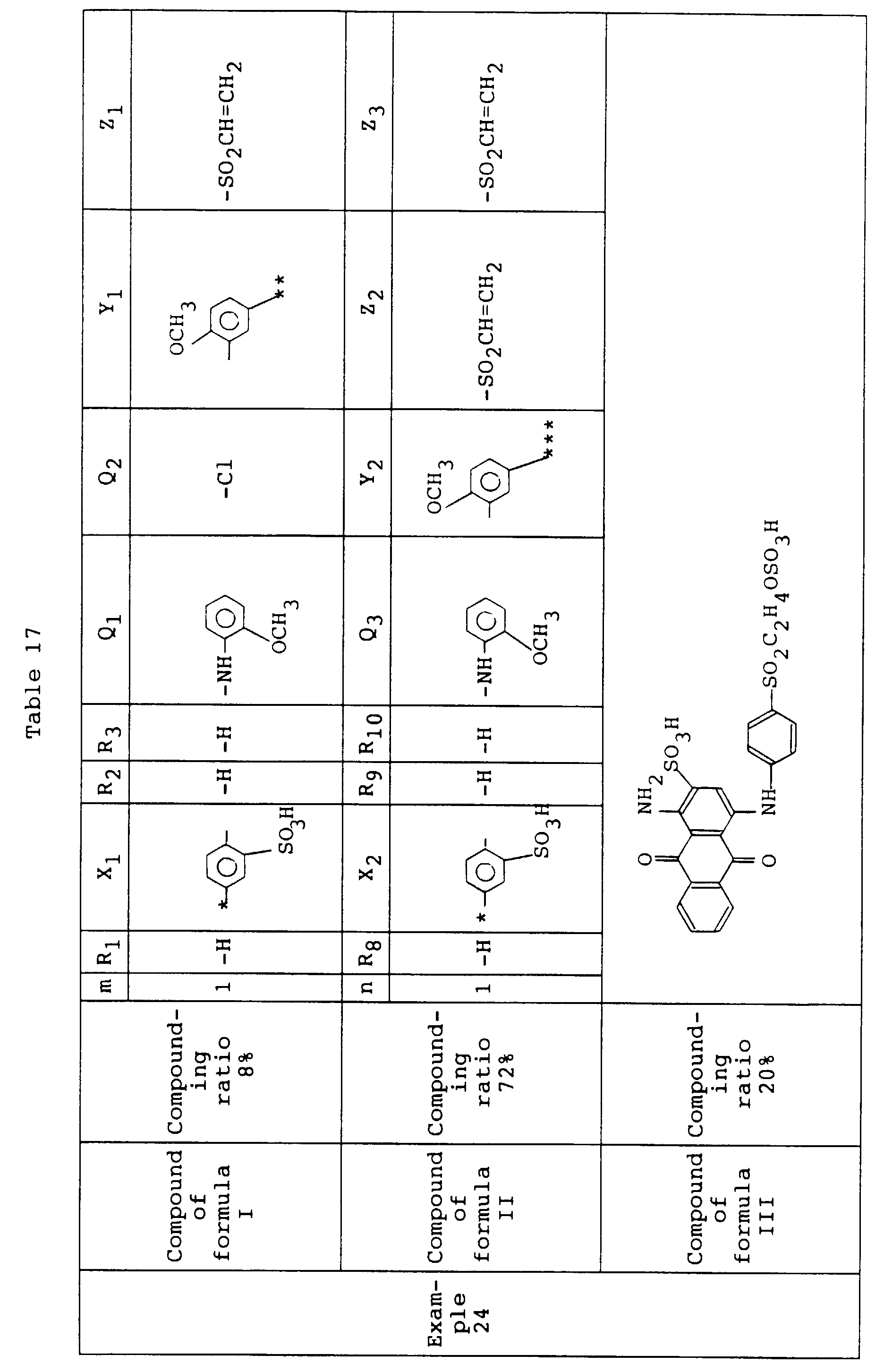

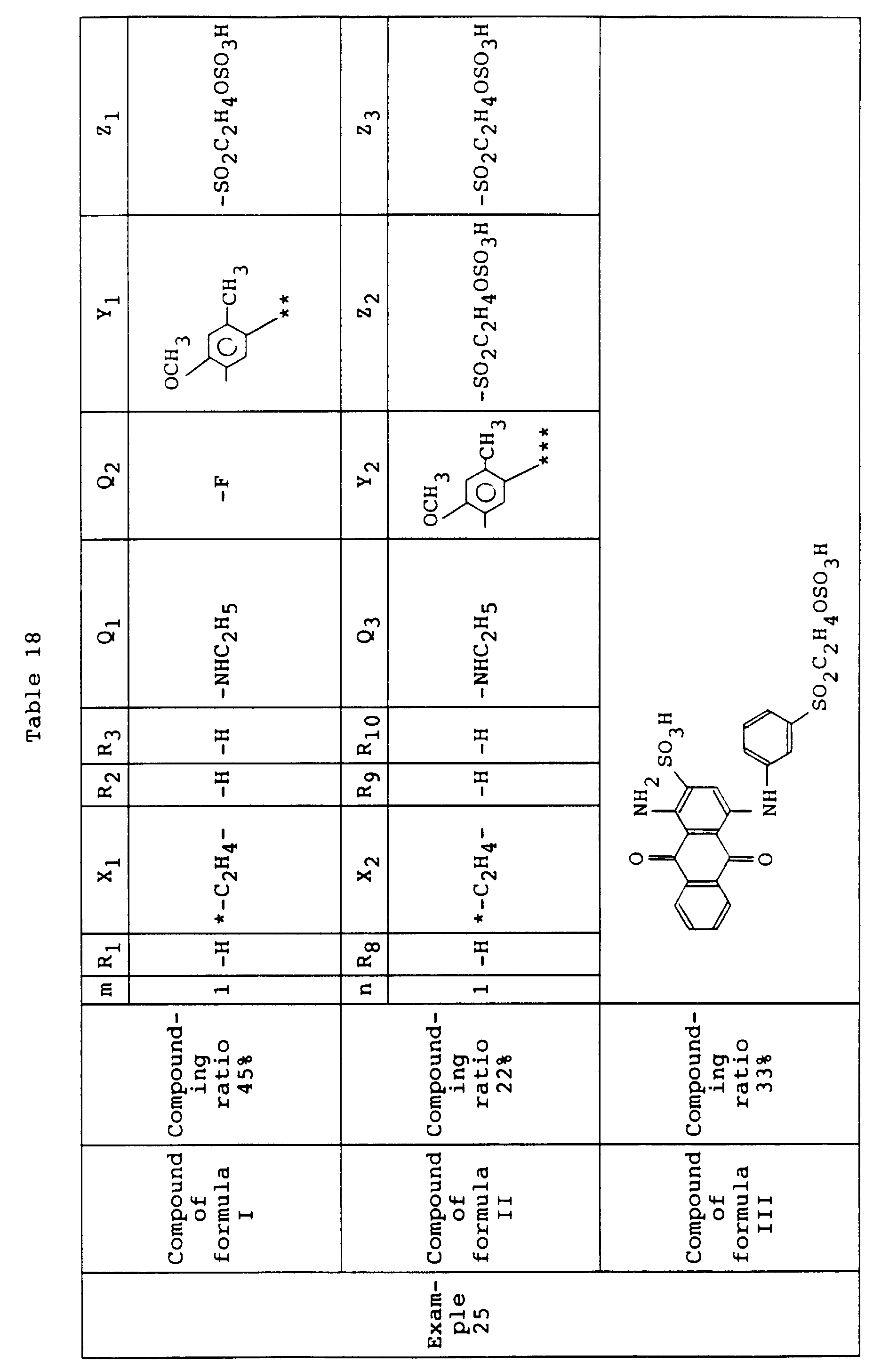

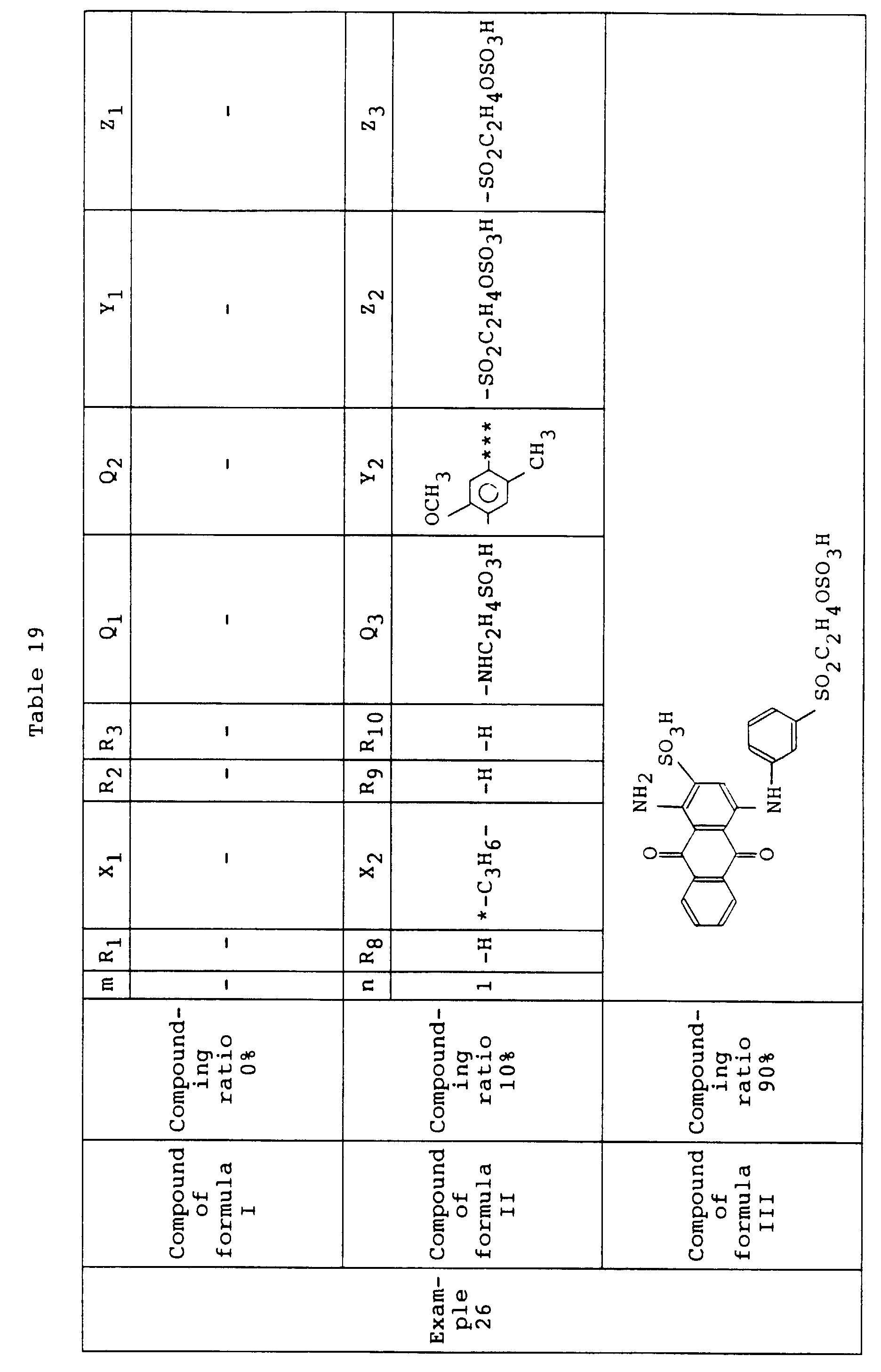

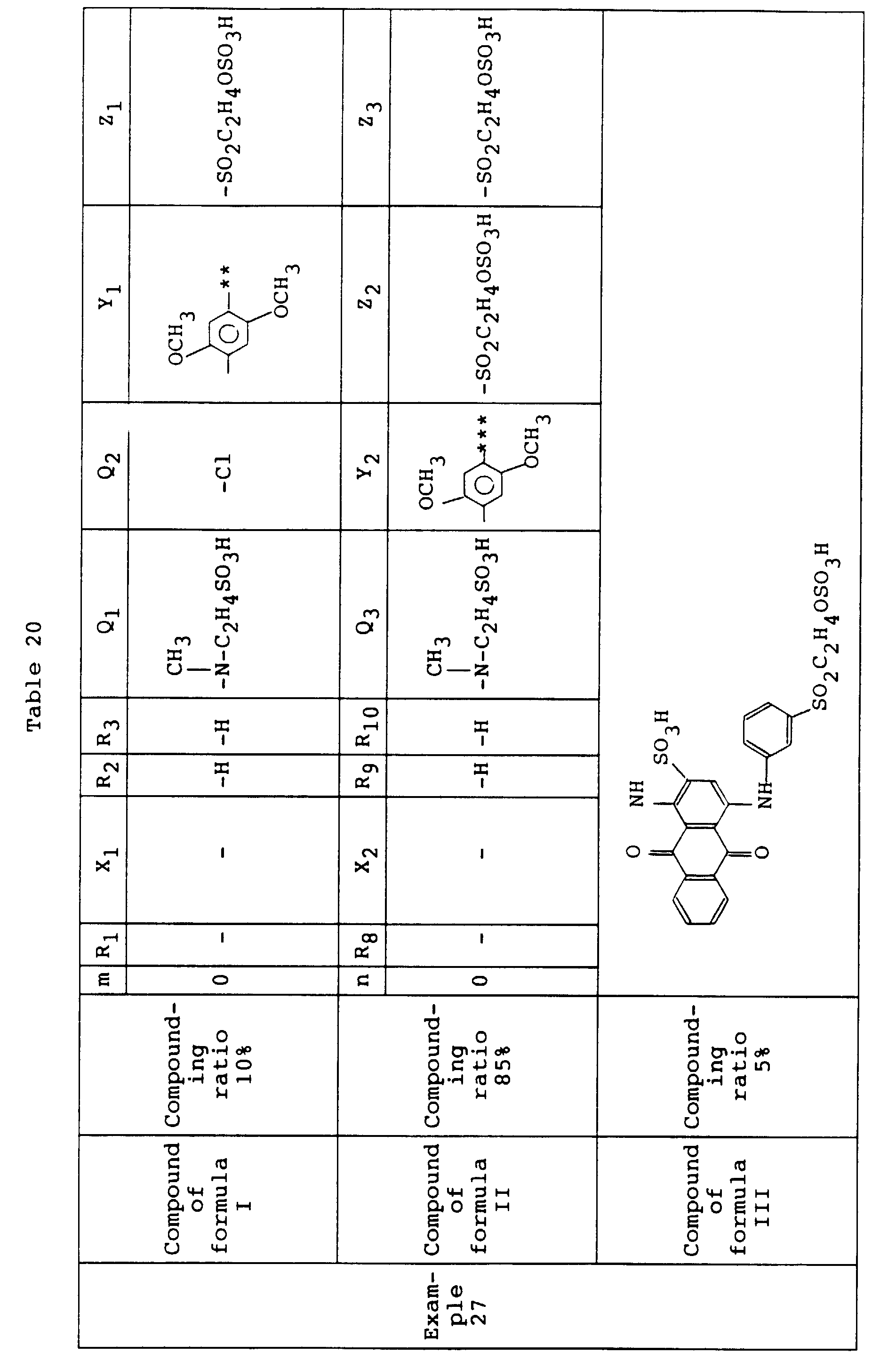

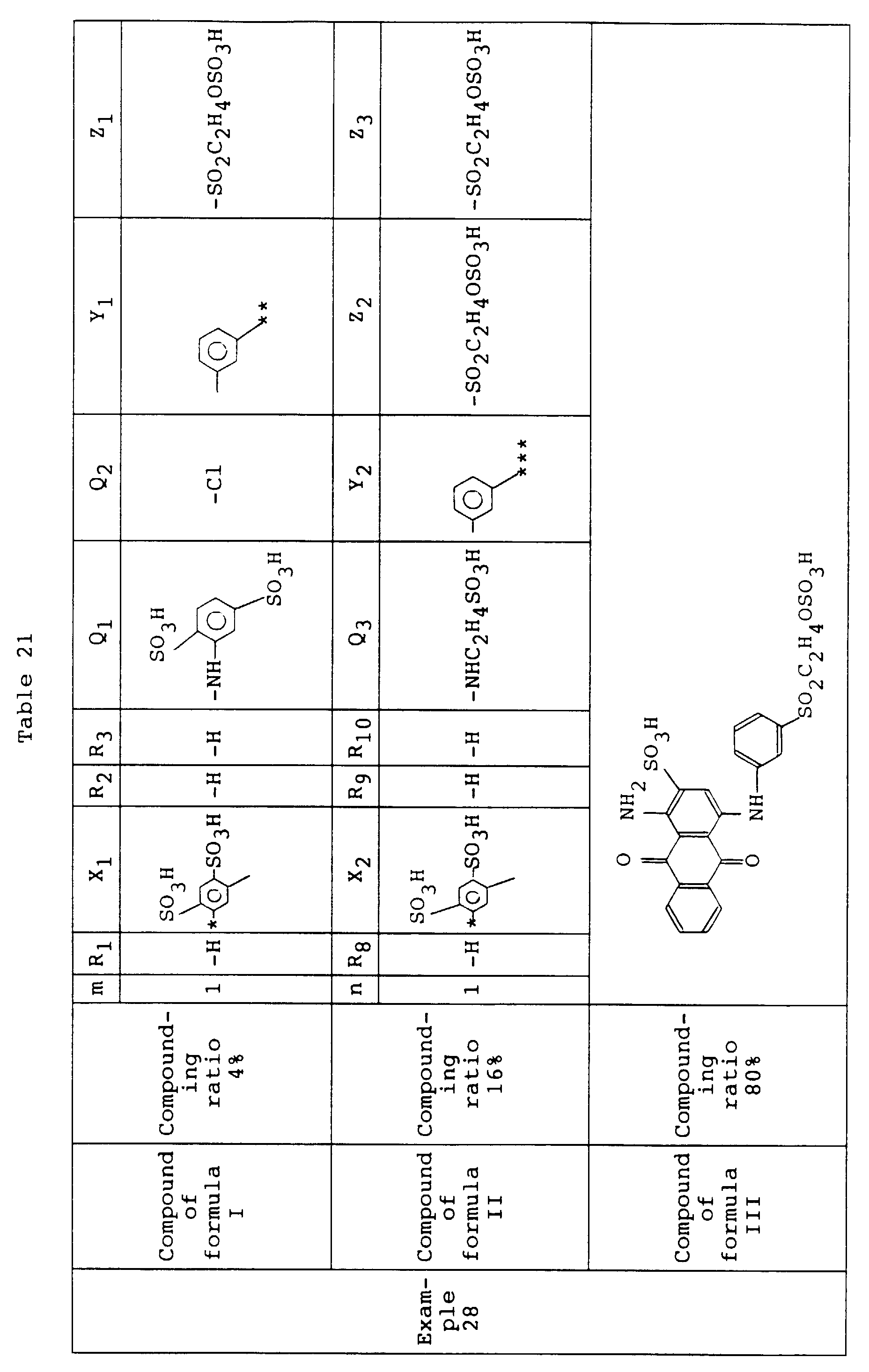

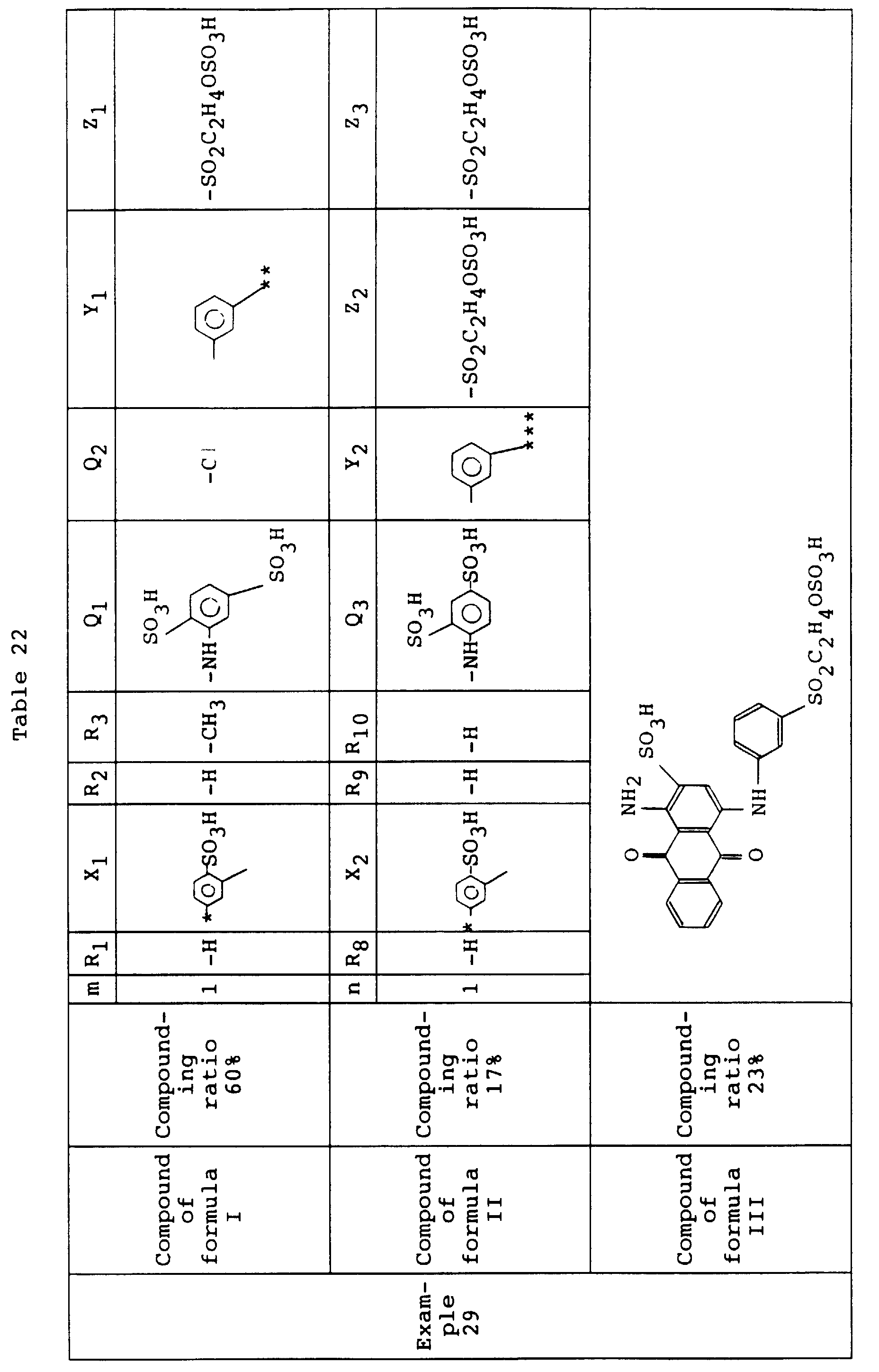

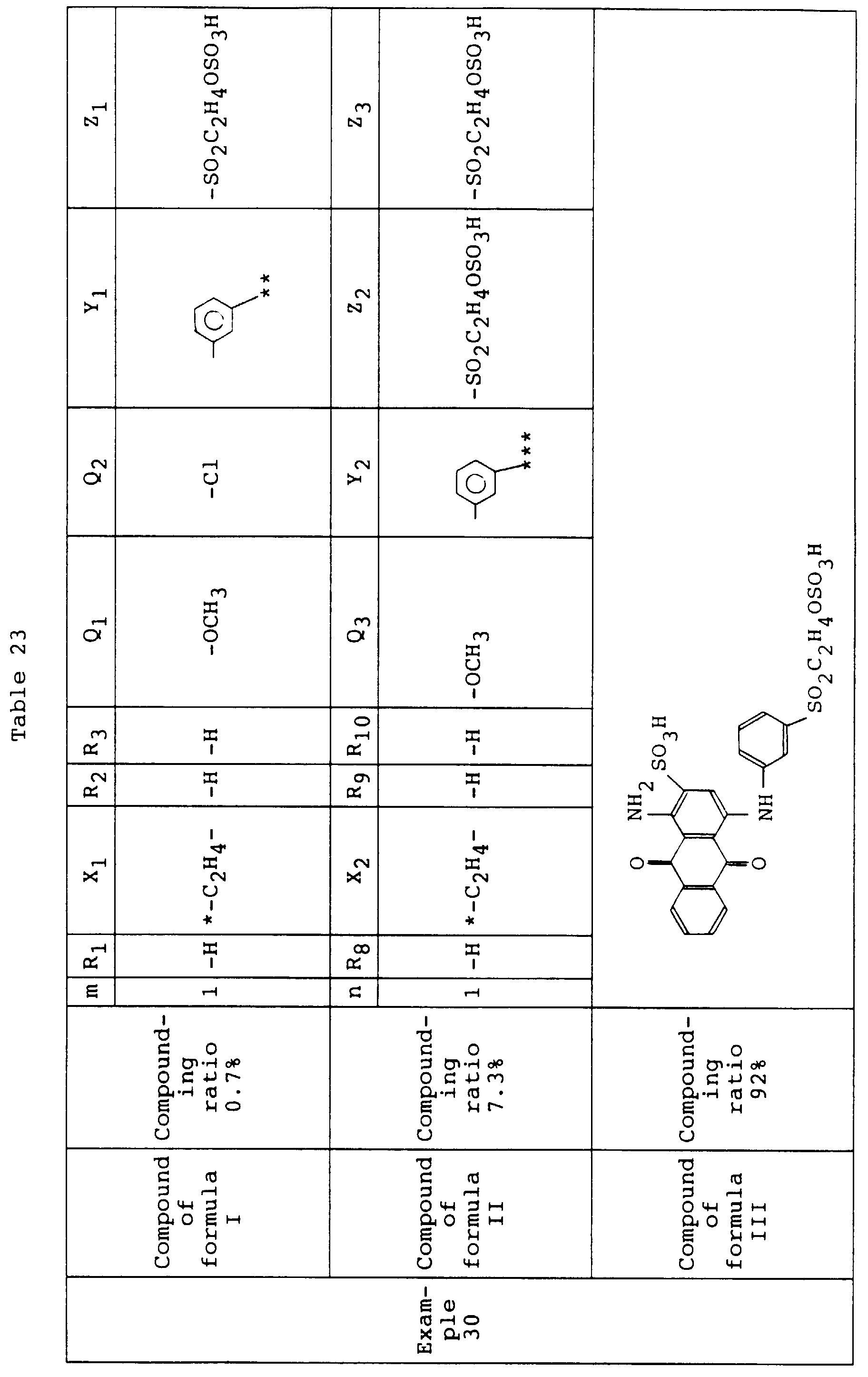

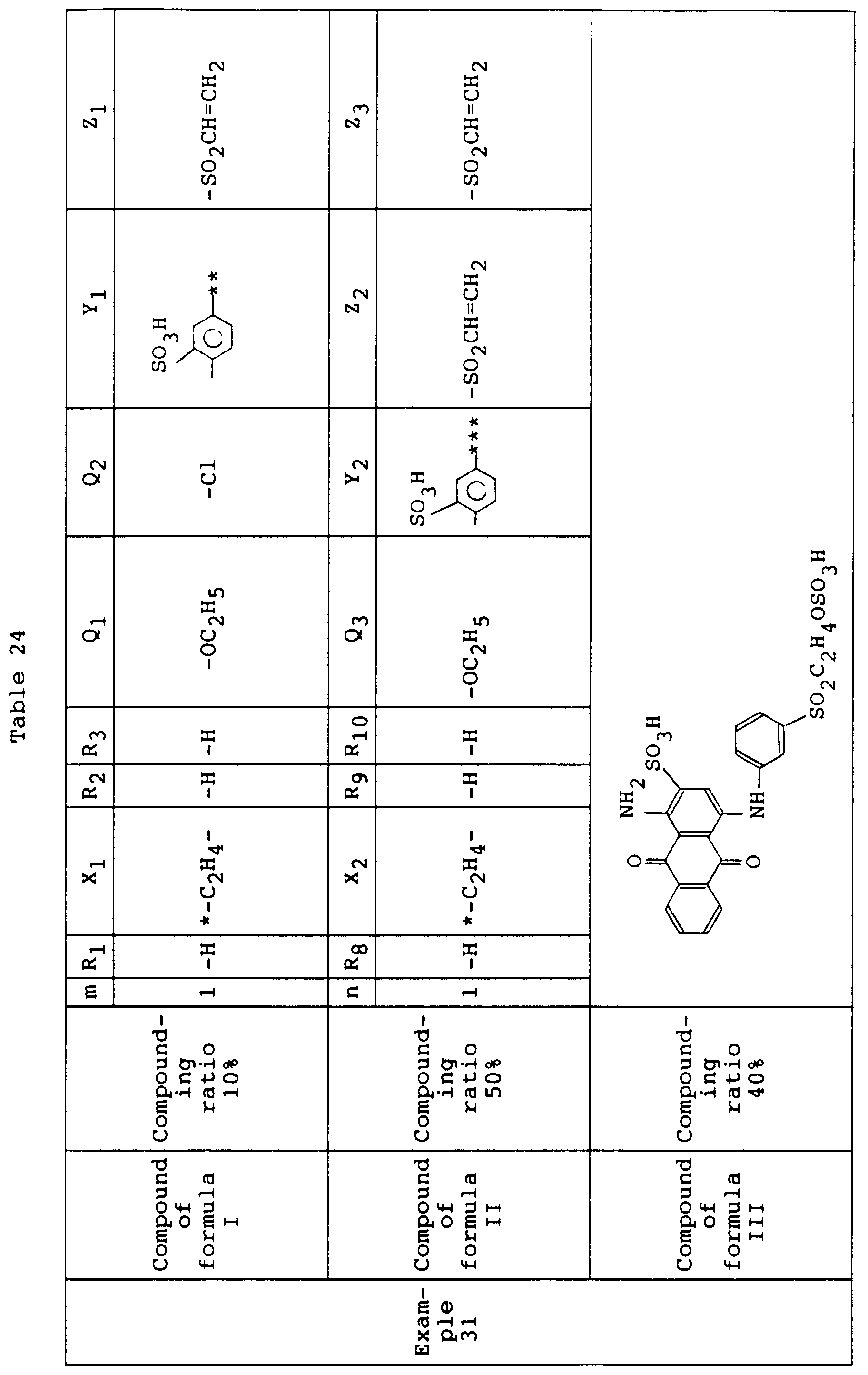

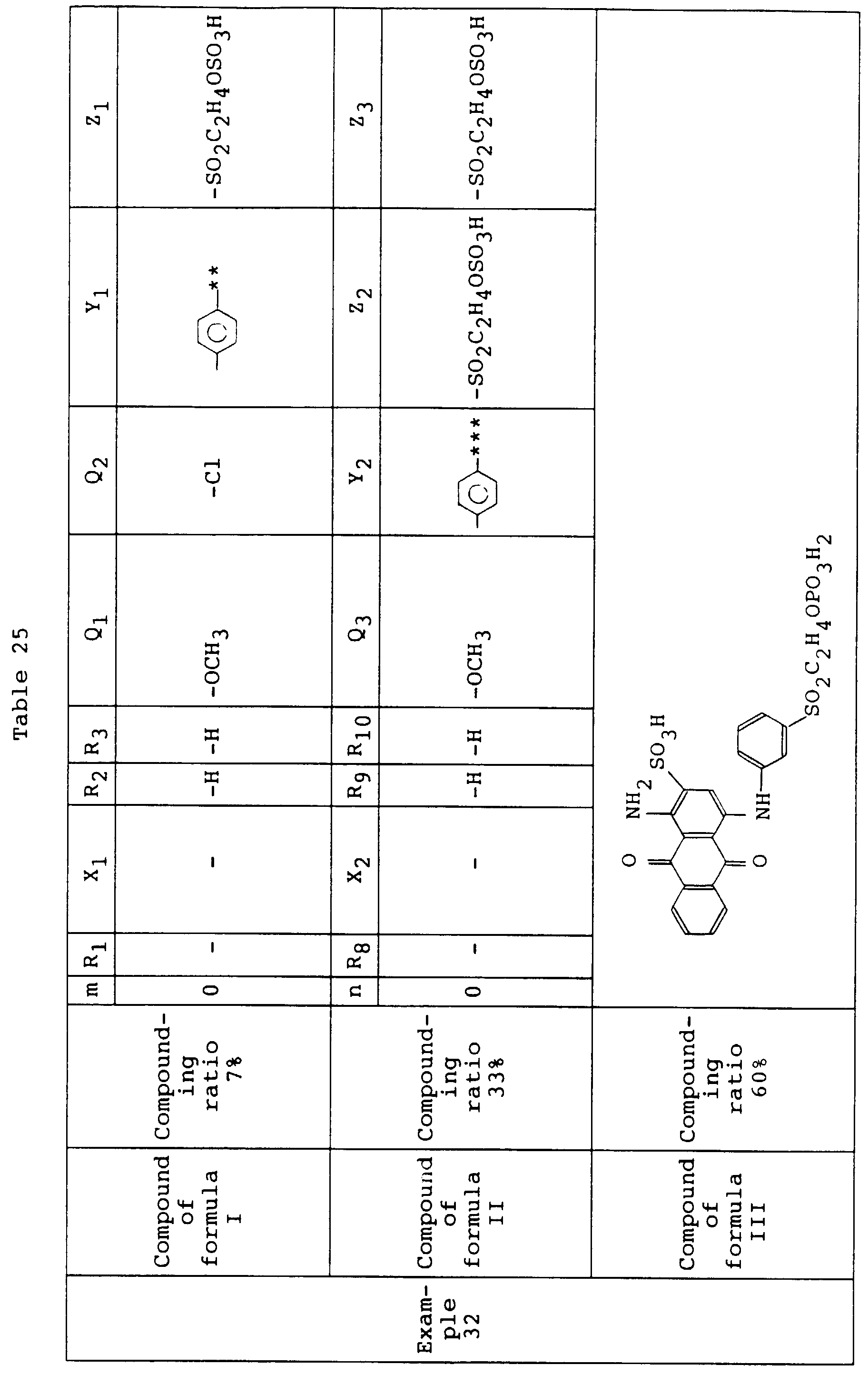

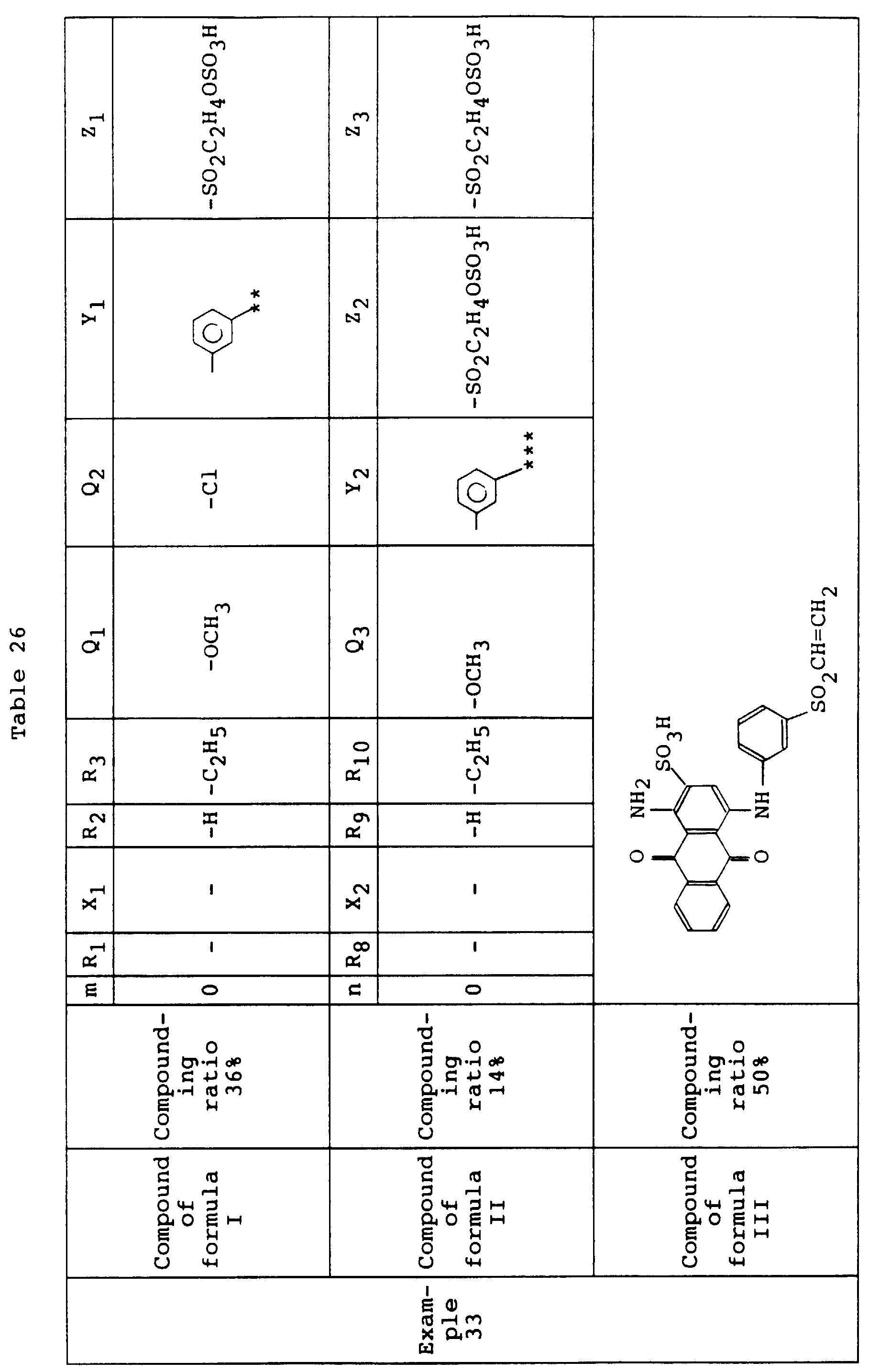

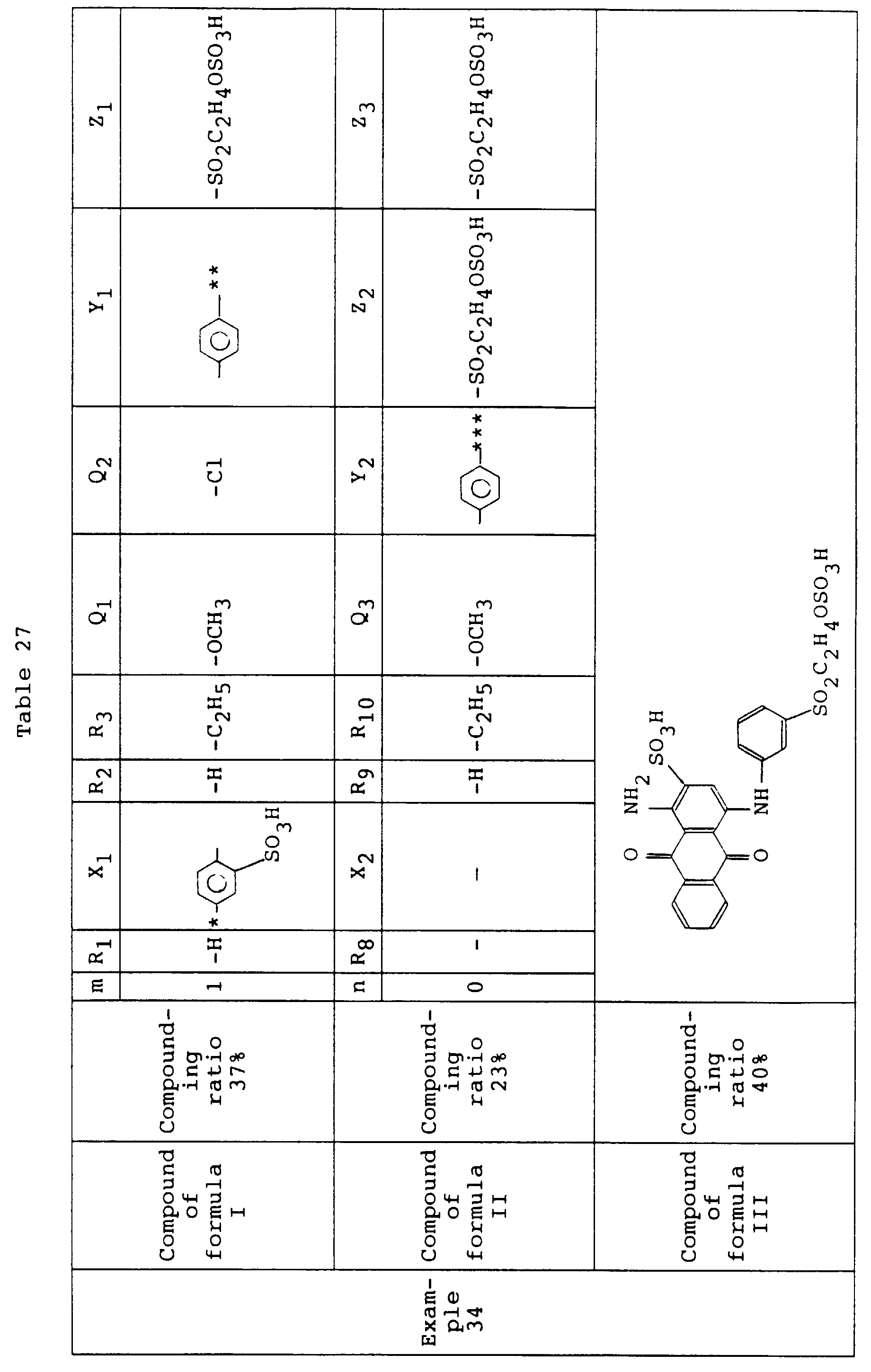

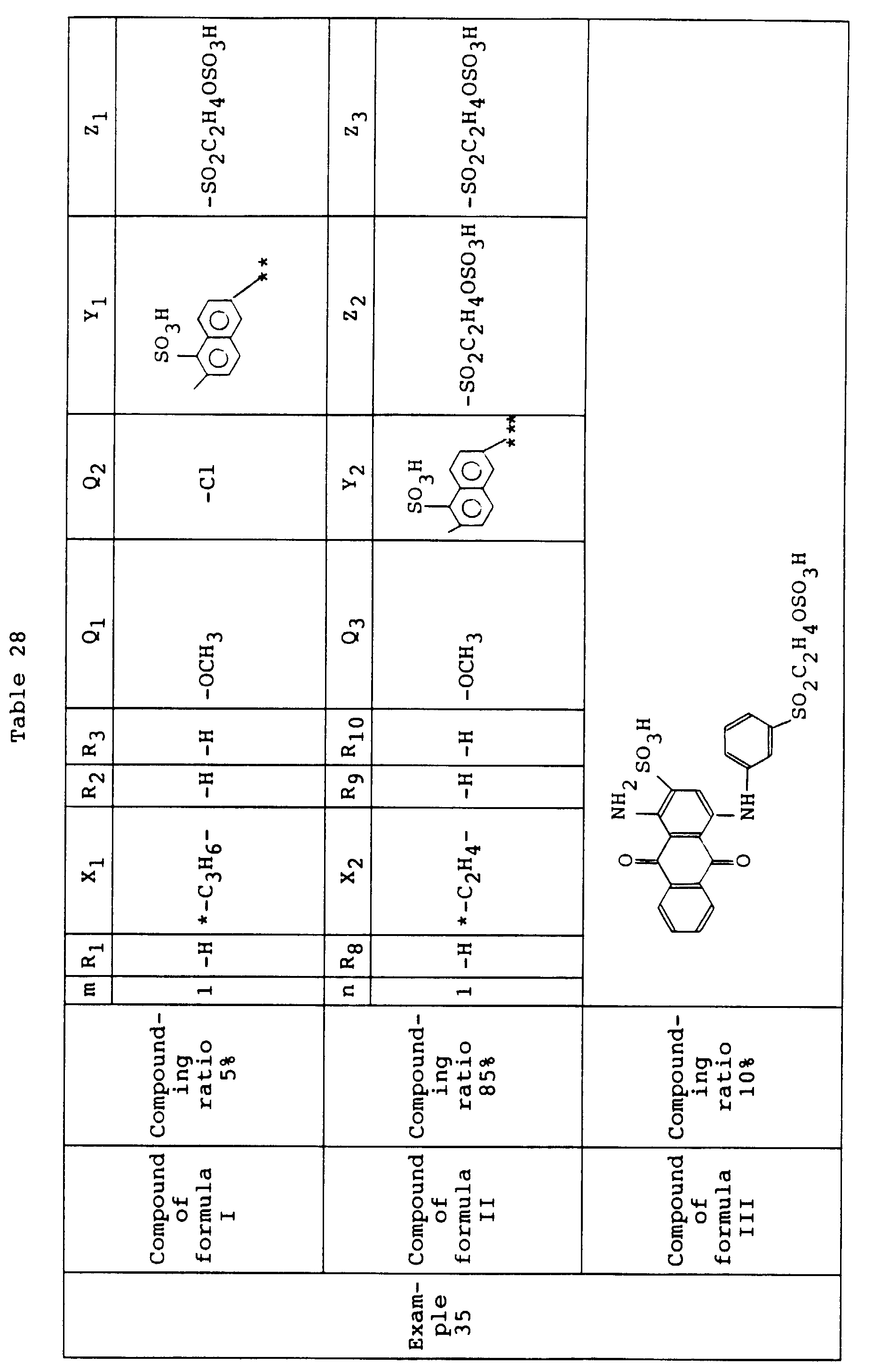

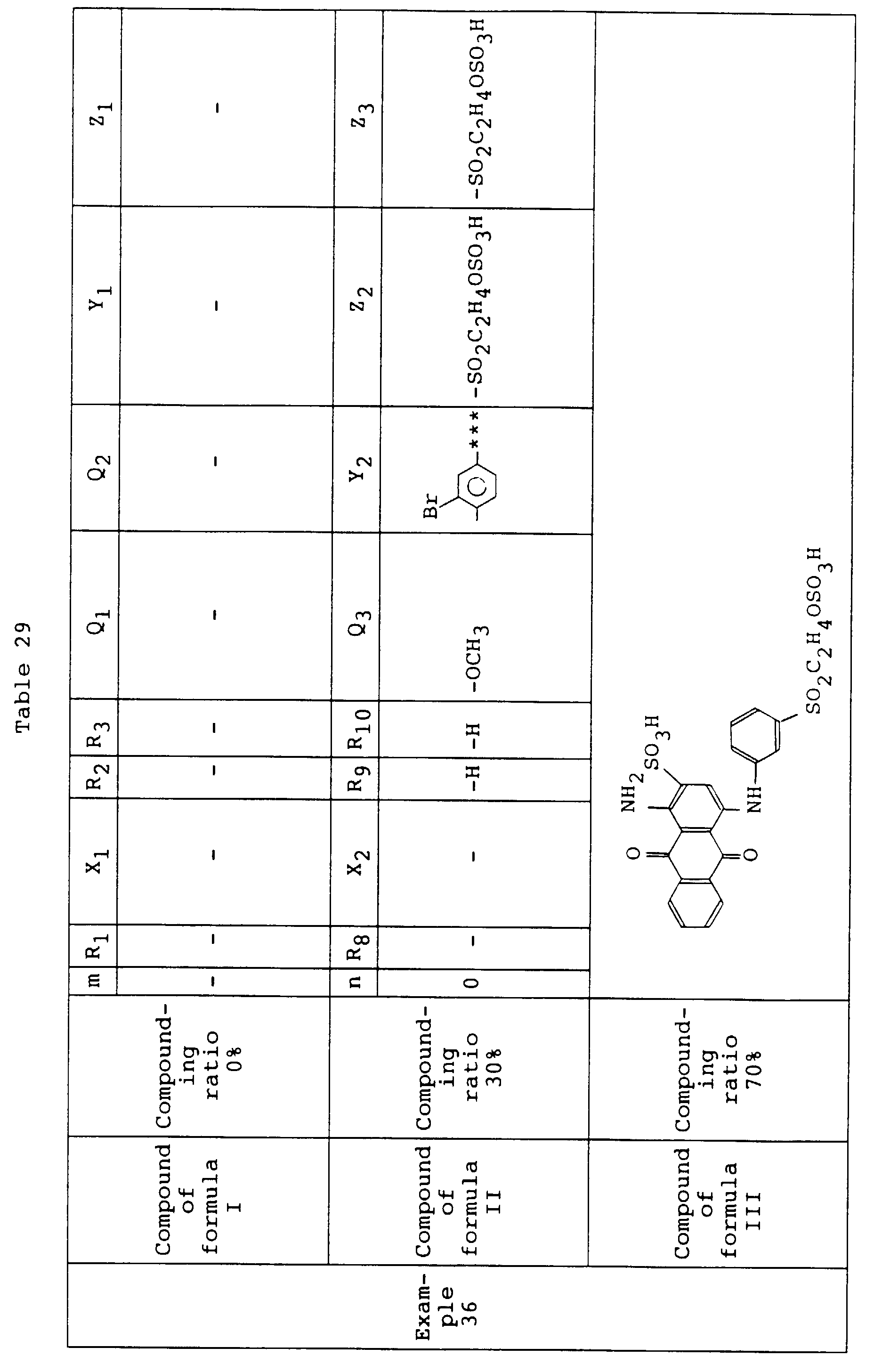

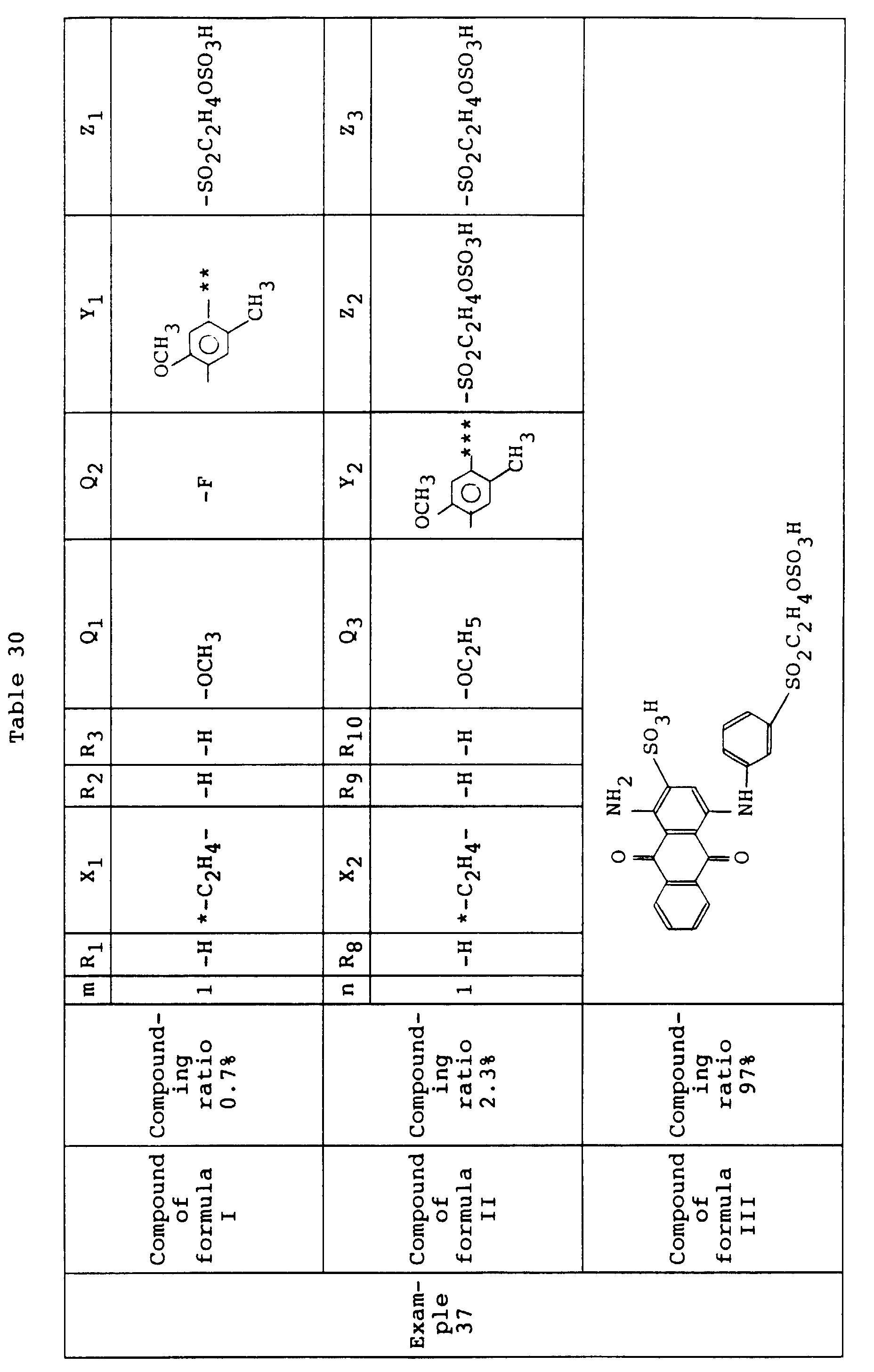

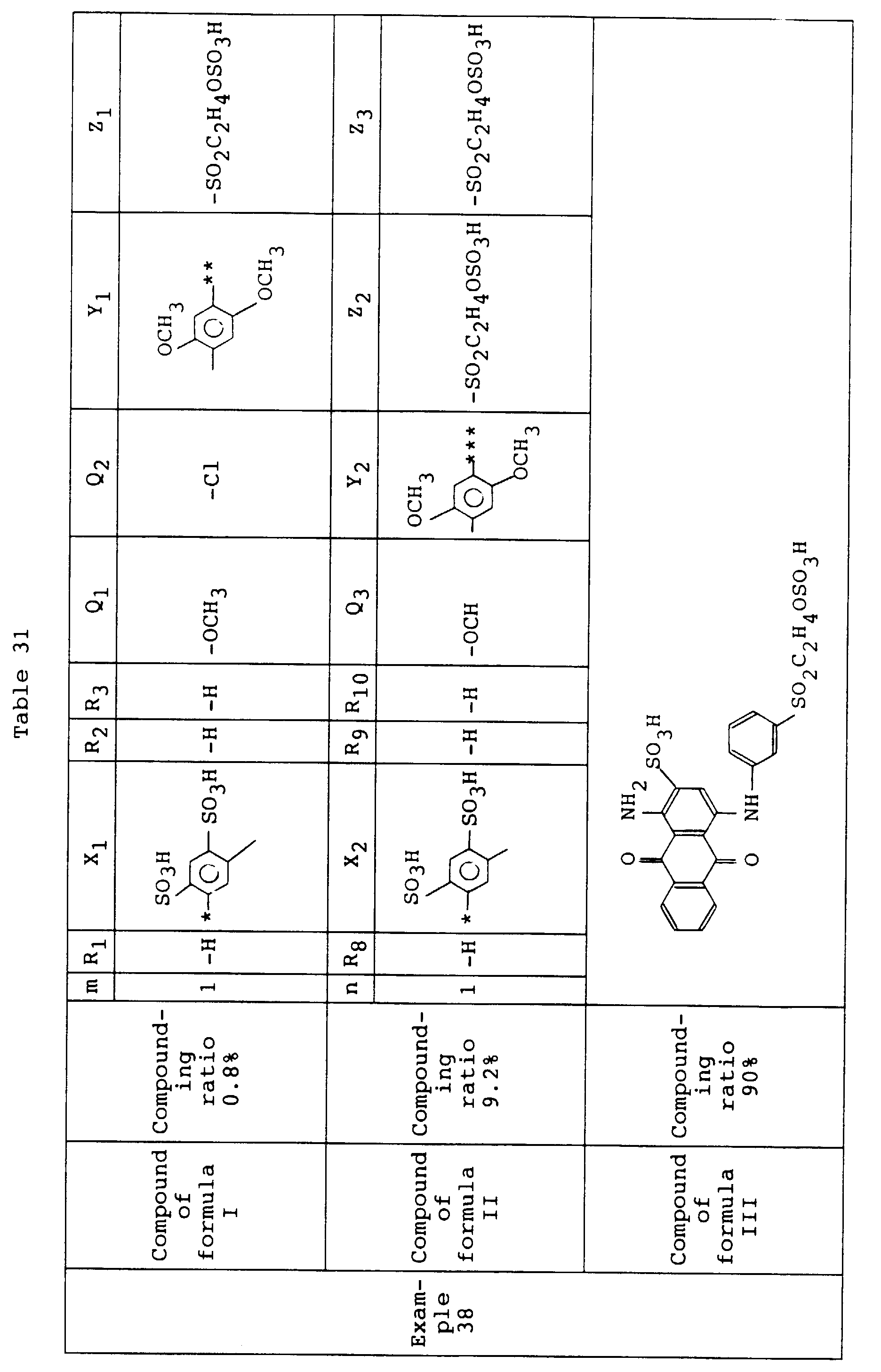

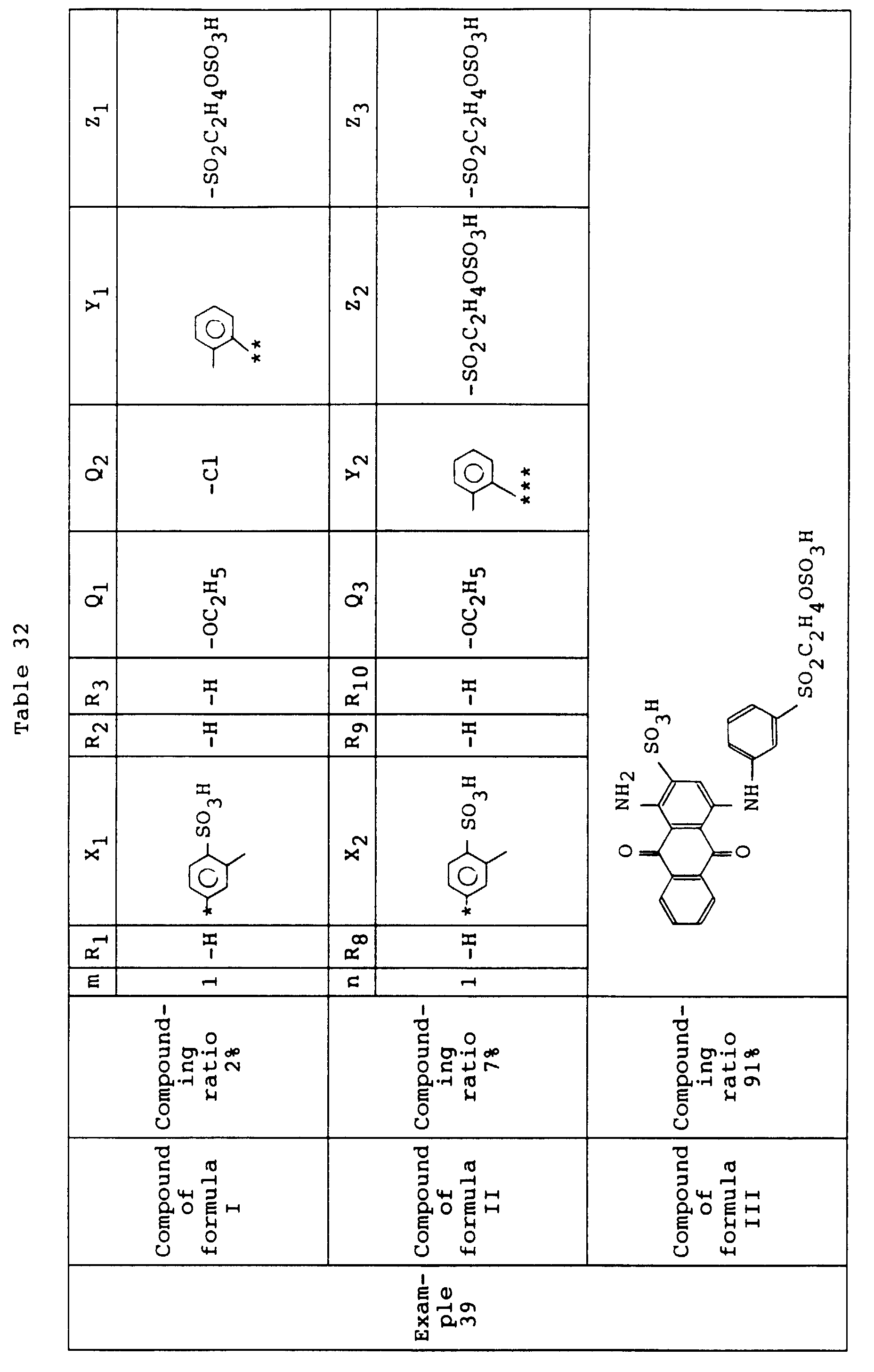

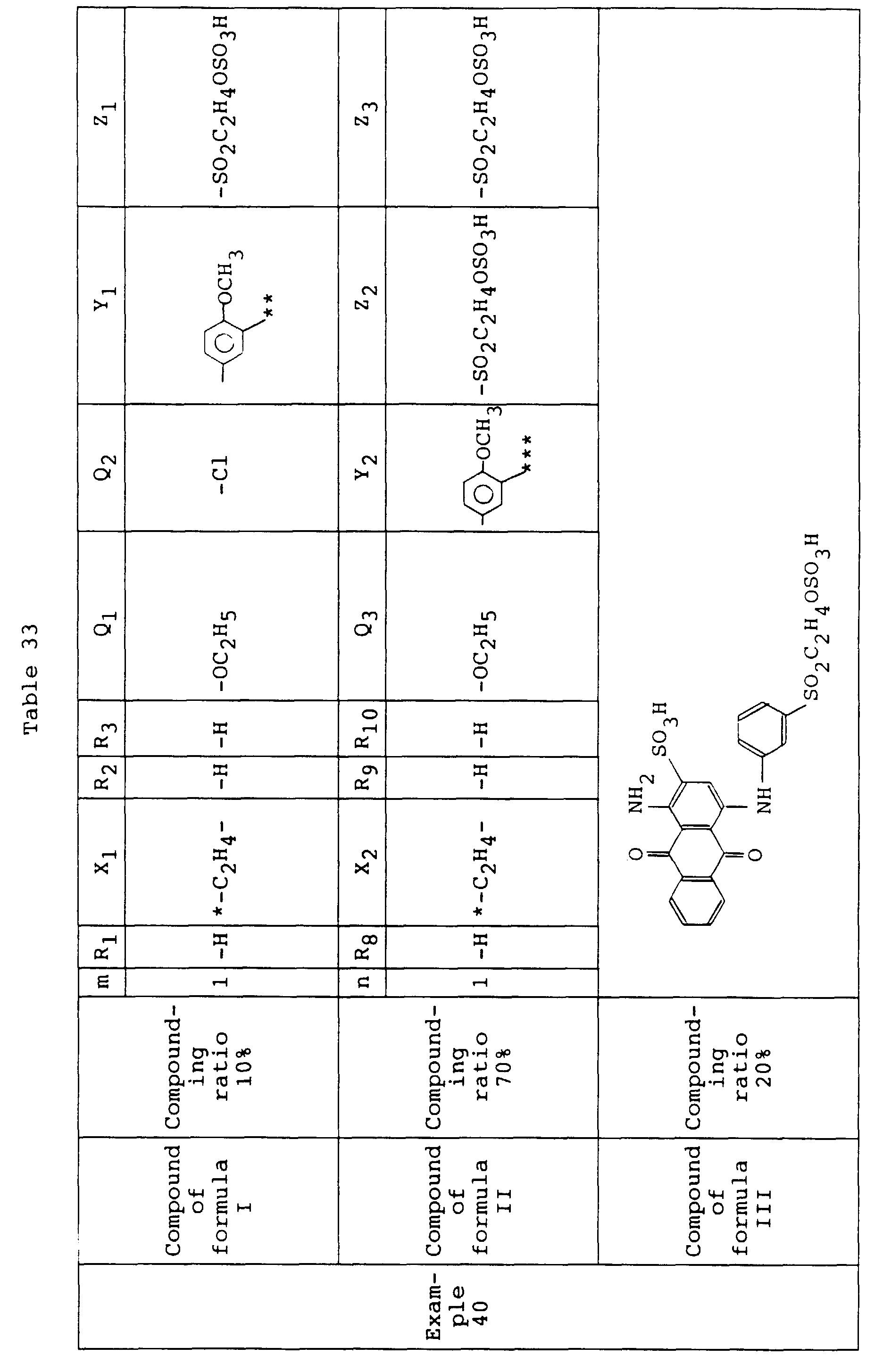

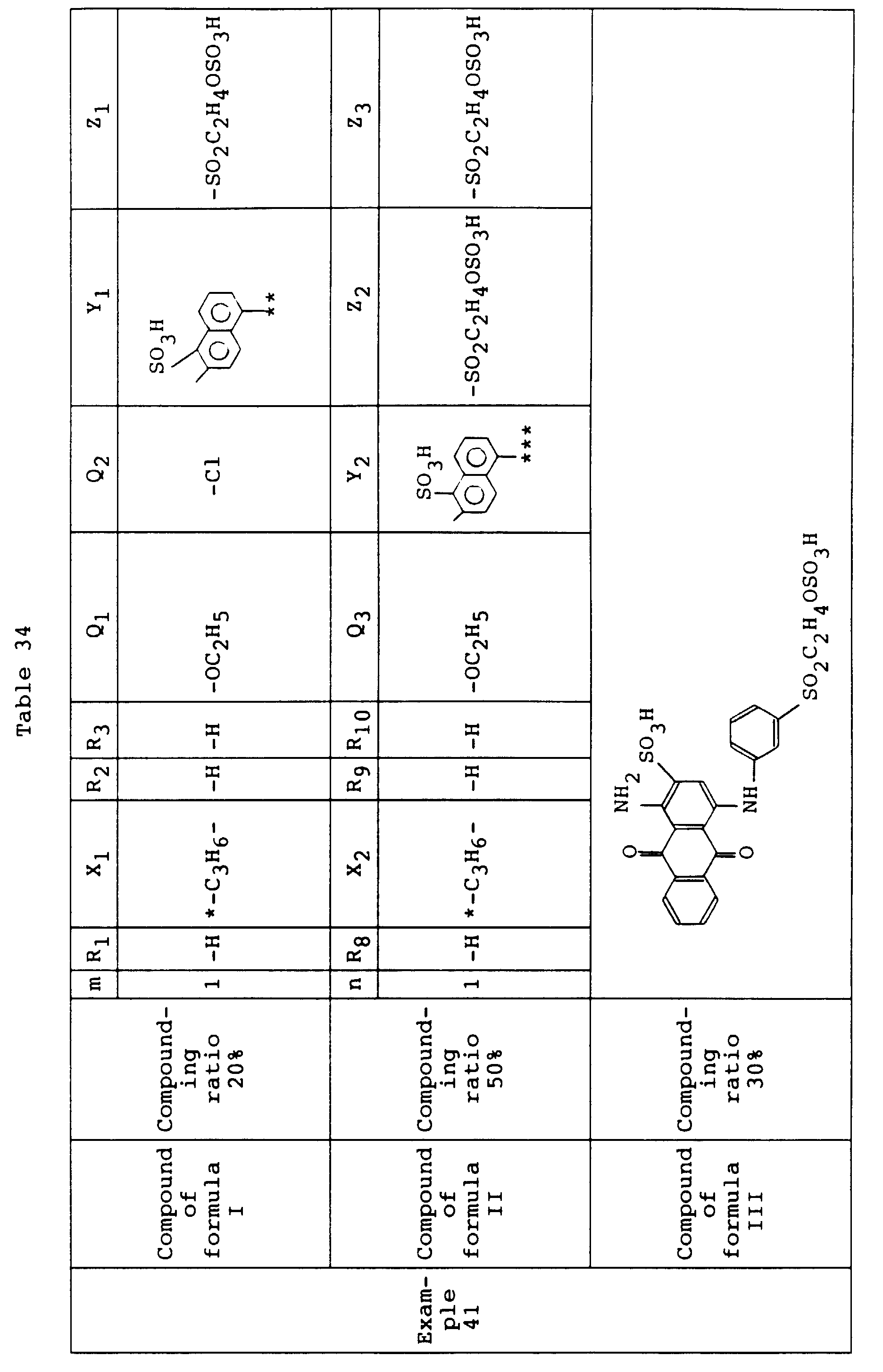

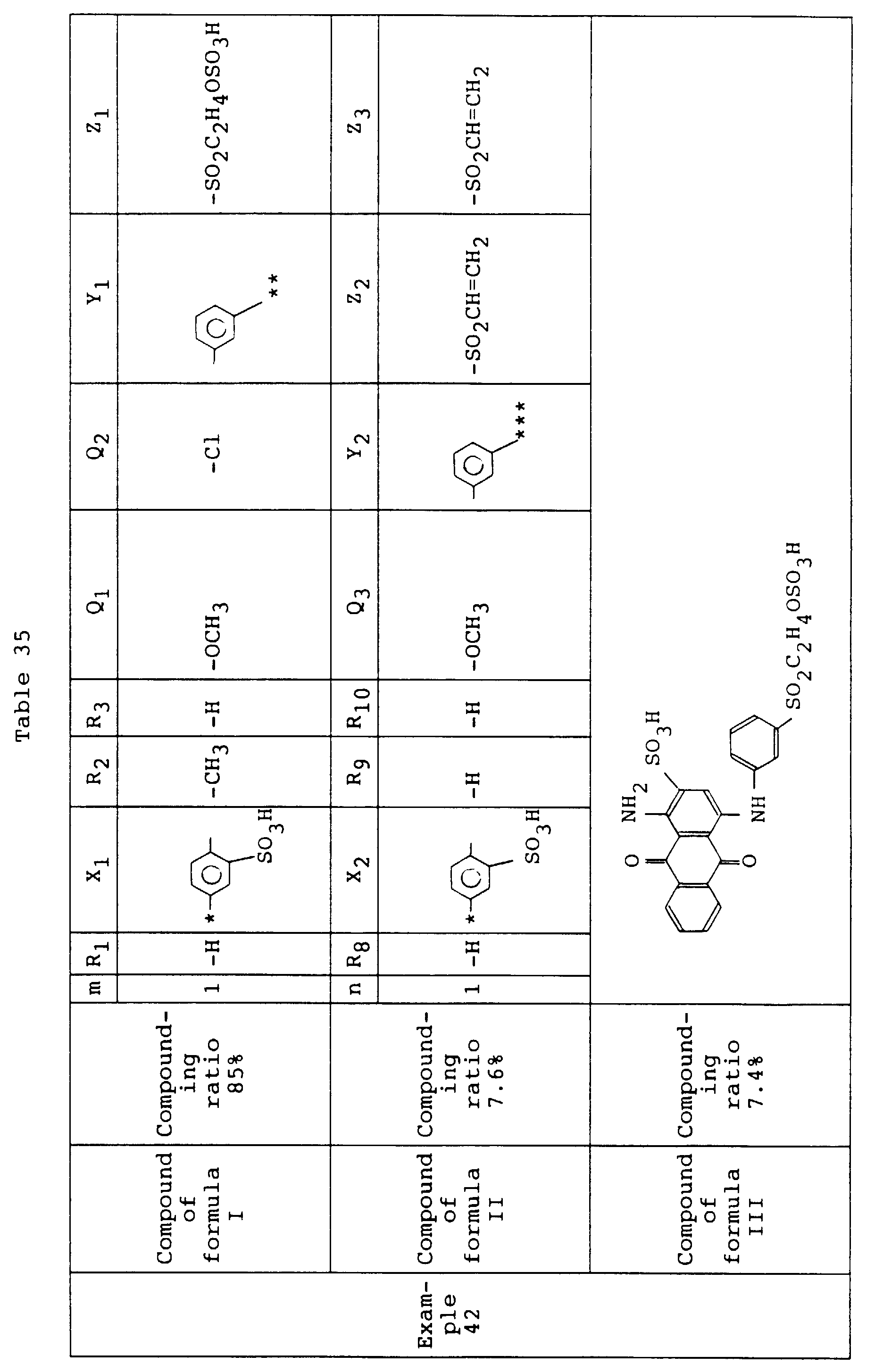

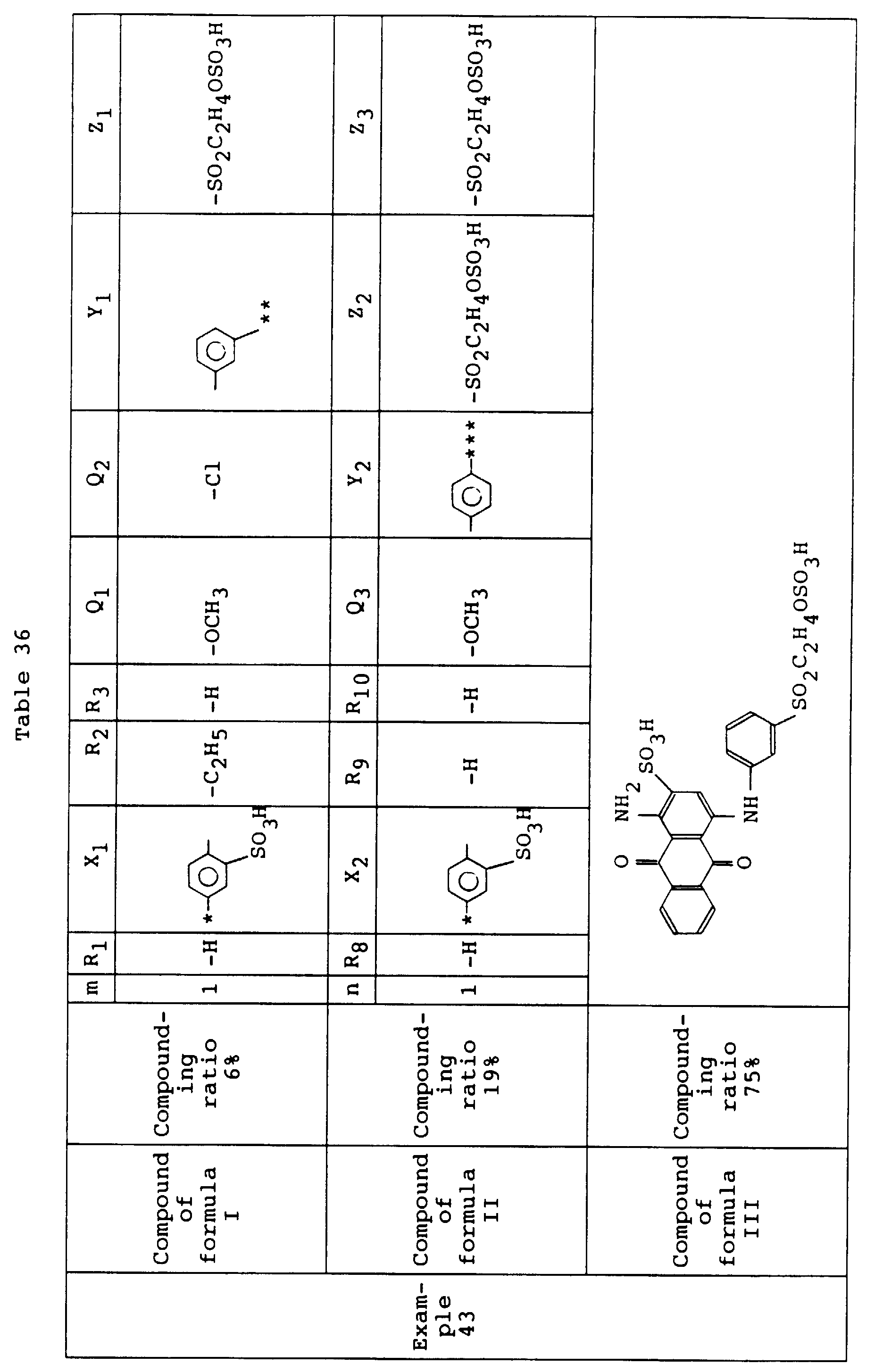

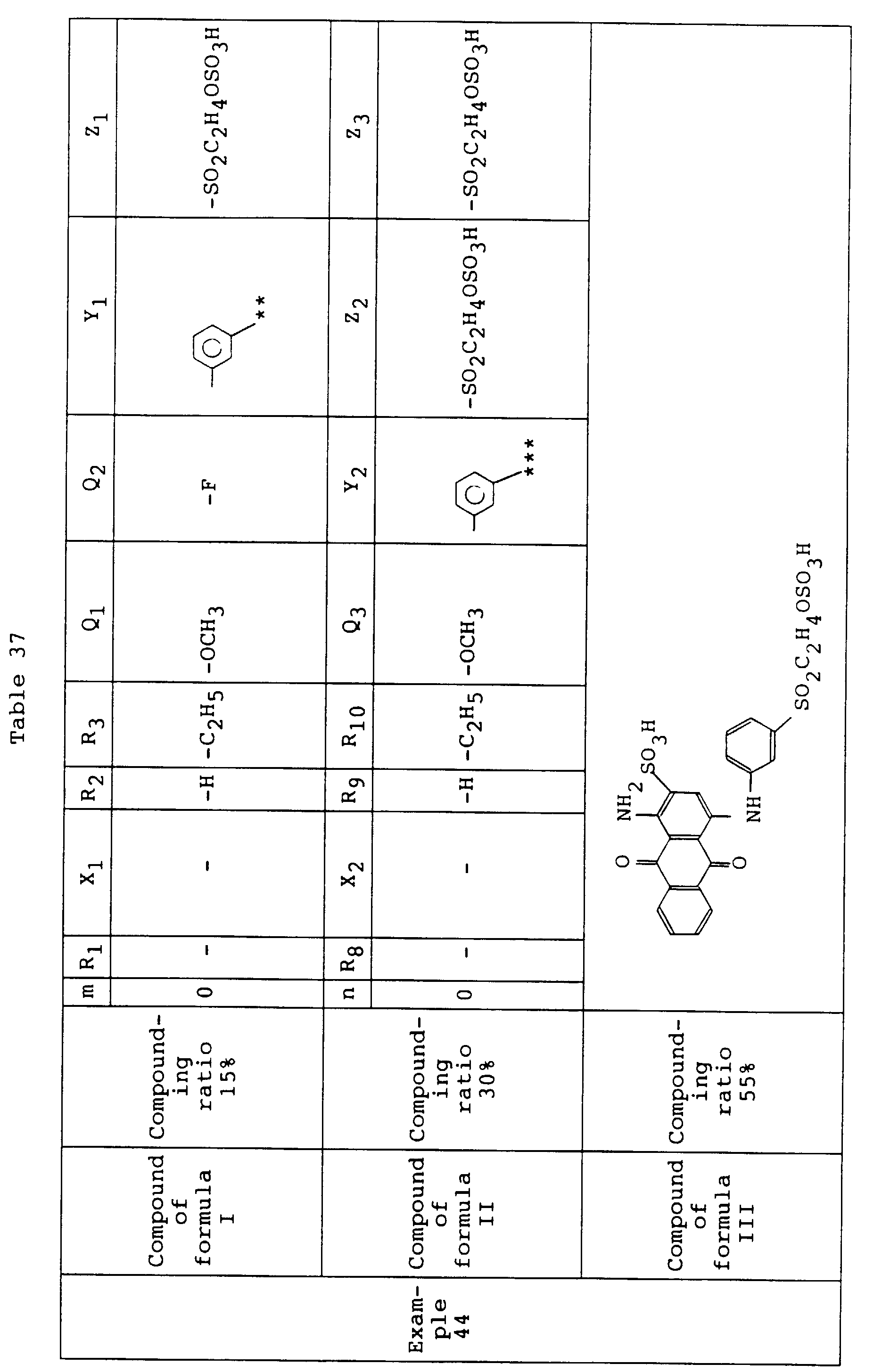

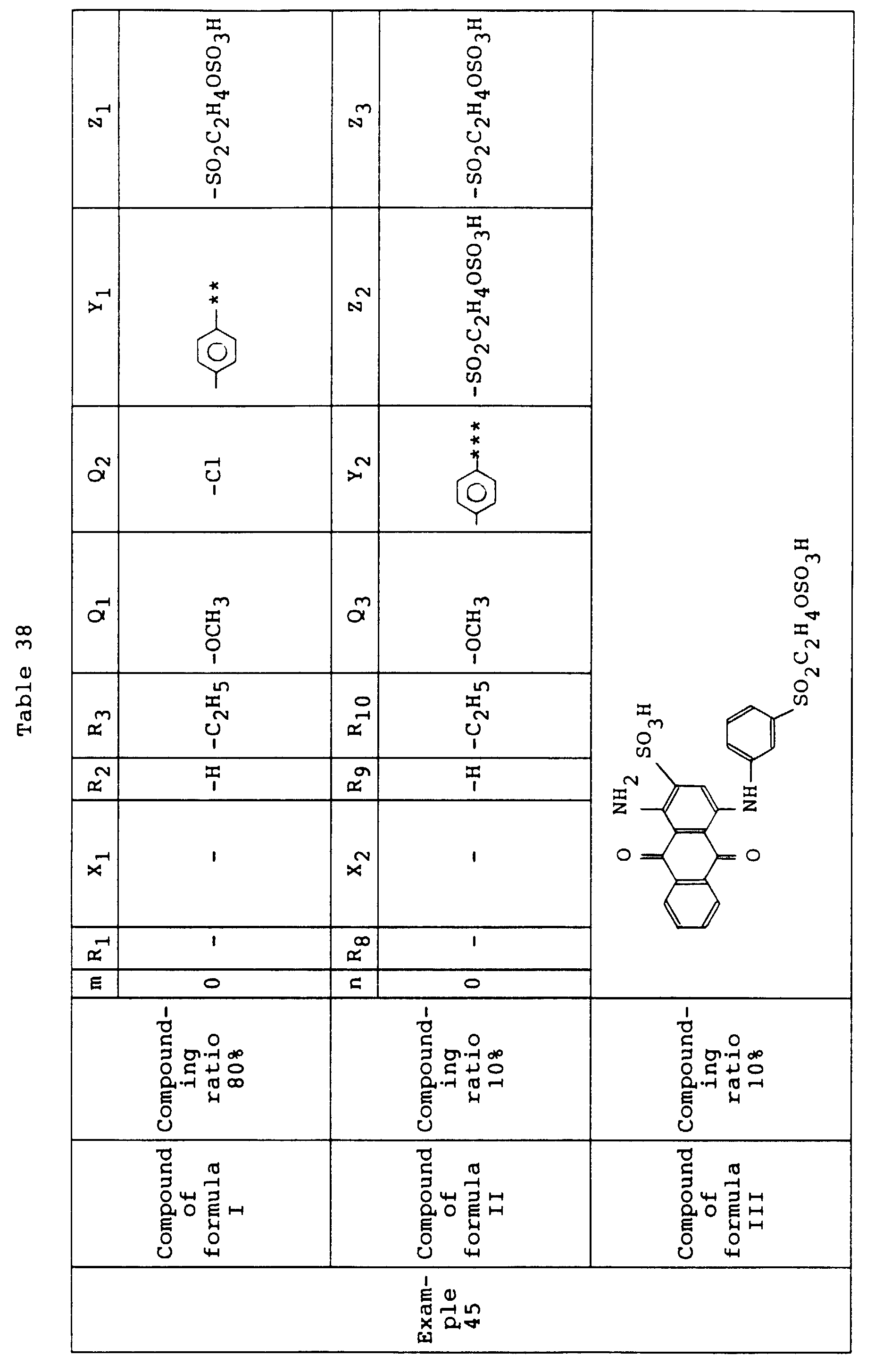

## Claims

1. A reactive dye composition comprising:
A) at least one member selected from the dioxazine compound group represented by the following formula (I) in the free acid form: 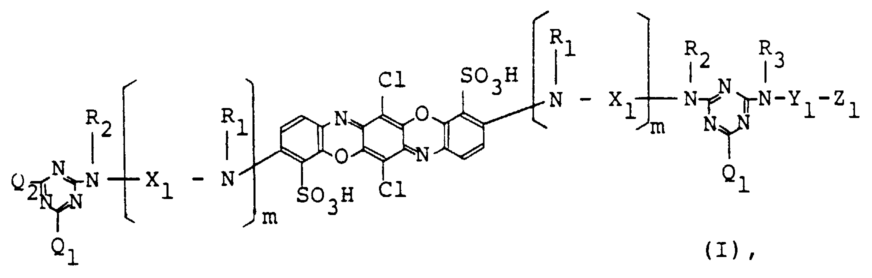 wherein R₁, R₂ and R₃ are independently hydrogen or unsubstituted or substituted lower alkyl, X₁ is an unsubstituted or substituted and straight, branched or cyclic aliphatic bridging group or an unsubstituted or substituted aromatic bridging group, m is 0 or 1, Y₁ is unsubstituted or substituted phenylene or unsubstituted or substituted naphthylene, Z₁ is -SO₂CH=CH₂ or -SO₂CH₂CH₂L₁ in which L₁ is a group capable of being split by the action of an alkali, Q₁ is halogeno, unsubstituted or substituted pyridinio, -N(R₄)R₅, -OR₆ or -SR₇ in which R₄, R₅, R₆ and R₇ are independently hydrogen or an unsubstituted or substituted alkyl, phenyl, naphthyl or benzyl group, and Q₂ is chloro or fluoro; or
at least one member selected from the dioxazine compound group represented by the following formula (II) in the free acid form: 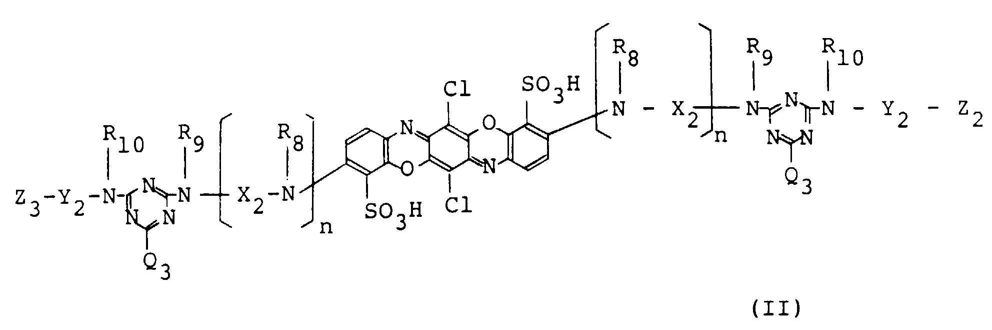 wherein R₈, R₉ and R₁₀ are independently hydrogen or unsubstituted or substituted lower alkyl, X₂ is an unsubstituted or substituted and straight, branched or cyclic aliphatic bridging group or an unsubstituted or substituted aromatic bridging group, n is 0 or 1, Y₂ is unsubstituted or substituted phenylene or unsubstituted or substituted naphthylene, Z₂ and Z₃ are independently -SO₂CH=CH₂ or -SO₂CH₂CH₂L₂ in which L₂ is a group capable of being split by the action of an alkali, and Q₃ is halogeno, unsubstituted or substituted pyridinio, -N(R₁₁)R₁₂, -OR₁₃ or -SR₁₄ in which R₁₁, R₁₂, R₁₃ and R₁₄ are independently hydrogen or an unsubstituted or substituted alkyl, phenyl, naphthyl or benzyl group; or
a mixture of the dioxazine compound of the formula (I) and the dioxazine compound of the formula (II); and
B) at least one member selected from the anthraquinone compound group represented by the following formula (III) in the free acid form: 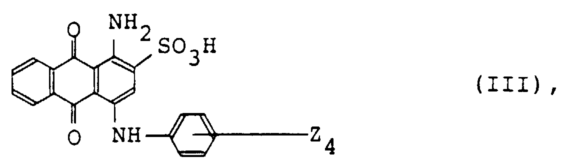 wherein Z₄ is -SO₂CH=CH₂ or -SO₂CH₂CH₂L₃ in which L₃ is a group capable of being split by the action of an alkali.

2. The composition according to Claim 1, wherein the amount in weight basis of B) is from 0.01 to 90 times that of A).

3. The composition according to Claim 1 or 2, which comprises any of the dioxazine compound of the formula (I) or (II) as A).

4. The composition according to Claim 1 or 2, which comprises a mixture of the dioxazine compound of the formula (I) and the dioxazine compound of the formula (II) as A).

5. The composition according to Claim 4, wherein the amount in weight basis of one of the dioxazine compound of the formula (I) and the dioxazine compound of the formula (II) is up to 100 times that of the other dioxazine compound.

6. The composition according to Claim 4, wherein the amount in weight basis of the dioxazine compound of the formula (II) is from 0.05 to 100 times that of the dioxazine compound of the formula (I).

7. A method for dyeing or printing a cellulose fiber material or a fiber material containing cellulose fiber, which comprises applying thereto the composition according to any one of Claims 1 to 6.

8. Use of the composition according to any one of Claims 1 to 6 for dyeing or printing a cellulose fiber material or a fiber material containing cellulose fiber.

## Patentansprüche

1. Reaktivfarbstoffzusammensetzung, umfassend:
A) wenigstens einen Vertreter, ausgewählt aus der Klasse der Dioxazinverbindungen der folgenden Formel (I) in Form der freien Säure: 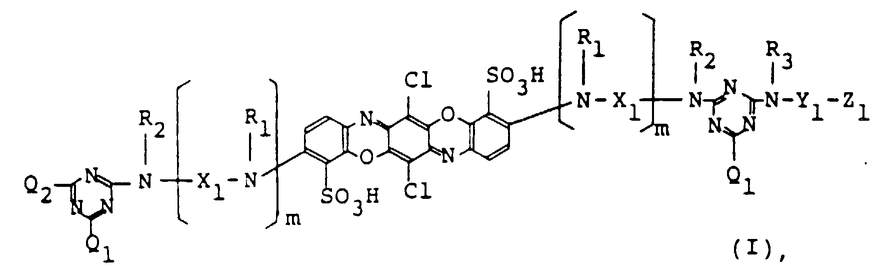 in der
R₁, R₂ und R₃ unabhängig voneinander ein Wasserstoffatom oder einen unsubstituierten oder substituierten Niederalkylrest bedeuten,
X₁ eine unsubstituierte oder substituierte und gerade, verzweigte oder cyclische aliphatische Brückengruppe oder eine unsubstituierte oder substituierte aromatische Brückengruppe bedeutet,
m für 0 oder 1 steht,
Y₁ ein unsubstituierter oder substituierter Phenylenrest oder ein unsubstituierter oder substituierter Naphthylenrest ist,
Z₁ für -SO₂CH=CH₂ oder -SO₂CH₂CH₂L₁ steht, wobei L₁ eine Gruppe darstellt, die durch Einwirkung einer Base abgespalten werden kann,
Q₁ ein Halogenatom, ein unsubstituierter oder substituierter Pyridiniorest, -N(R₄)R₅, -OR₆ oder -SR₇ ist, wobei R₄, R₅, R₆ und R₇ unabhängig voneinander ein Wasserstoffatom oder einen unsubstituierten oder substituierten Alkyl-, Phenyl-, Naphthyl- oder Benzylrest bedeuten, und
Q₂ ein Chlor- oder Fluoratom bedeutet; oder
wenigstens einen Vertreter, ausgewählt aus der Klasse der Dioxazinverbindungen der folgenden Formel (II) in Form der freien Säure: 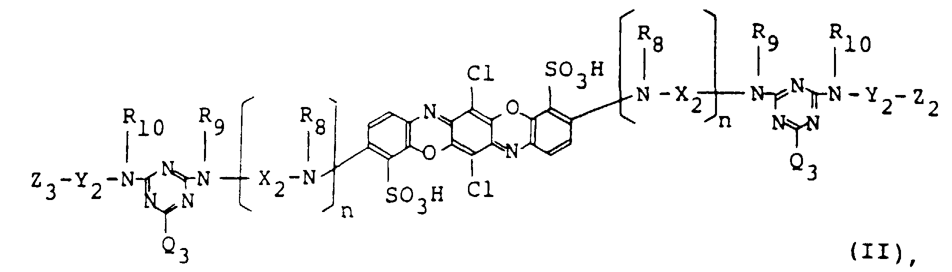 in der
R₈, R₉ und R₁₀ unabhängig voneinander ein Wasserstoffatom oder einen unsubstituierten oder substituierten Niederalkylrest bedeuten,
X₂ eine unsubstituierte oder substituierte und gerade, verzweigte oder cyclische aliphatische Brückengruppe oder eine unsubstituierte oder substituierte aromatische Brückengruppe bedeutet,
n für 0 oder 1 steht,
Y₂ ein unsubstituierter oder substituierter Phenylenrest oder ein unsubstituierter oder substituierter Naphthylenrest ist,
Z₂ und Z₃ unabhängig voneinander für -SO₂CH=CH₂ oder -SO₂CH₂CH₂L₂ stehen, wobei L₂ eine Gruppe darstellt, die durch Einwirkung einer Base abgespalten werden kann, und
Q₃ ein Halogenatom, ein unsubstituierter oder substituierter Pyridiniorest, -N(R₁₁)R₁₂, -OR₁₃ oder -SR₁₄ ist, wobei R₁₁, R₁₂, R₁₃ und R₁₄ unabhängig voneinander ein Wasserstoffatom oder einen unsubstituierten oder substituierten Alkyl-, Phenyl-, Naphthyl- oder Benzylrest bedeuten; oder
ein Gemisch der Dioxazinverbindung der Formel (I) und der Dioxazinverbindung der Formel (II); und
B) wenigstens einen Vertreter, ausgewählt aus der Klasse der Anthrachinonverbindungen der folgenden Formel (III) in Form der freien Säure: 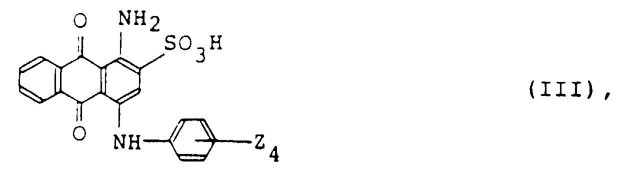 in der Z₄ für -SO₂CH=CH₂ oder -SO₂CH₂CH₂L₃ steht, wobei L₃ eine Gruppe darstellt, die durch Einwirkung einer Base abgespalten werden kann.

2. Zusammensetzung nach Anspruch 1, in der die Menge, auf Gewichtsbasis, von B) das 0,01- bis 90fache derjenigen von A) beträgt.

3. Zusammensetzung nach Anspruch 1 oder 2, umfassend als A) eine beliebige Dioxazinverbindung der Formel (I) oder (II).

4. Zusammensetzung nach Anspruch 1 oder 2, umfassend als A) ein Gemisch der Dioxazinverbindung der Formel (I) und der Dioxazinverbindung der Formel (II).

5. Zusammensetzung nach Anspruch 4, in der die Menge, auf Gewichtsbasis, einer der Dioxazinverbindungen der Formel (I) und der Dioxazinverbindungen der Formel (II) das bis zu 100fache derjenigen der anderen Dioxazinverbindung beträgt.

6. Zusammensetzung nach Anspruch 4, in der die Menge, auf Gewichtsbasis, der Dioxazinverbindung der Formel (II) das 0,05- bis 100fache derjenigen der Dioxazinverbindung der Formel (I) beträgt.

7. Verfahren zum Färben oder Bedrucken eines Cellulosefasermaterials oder eines Fasermaterials, das Cellulosefasern enthält, umfassend Auftragen der Zusammensetzung nach einem der Ansprüche 1 bis 6.

8. Verwendung der Zusammensetzung nach einem der Ansprüche 1 bis 6 zum Färben oder Bedrucken eines Cellulosefasermaterials oder eines Fasermaterials, das Cellulosefasern enthält

## Revendications

1. Composition de colorants réactifs comprenant :
A) au moins un composant choisi dans le groupe des dérivés de dioxazine représentés par la formule suivante (I) sous forme acide libre: 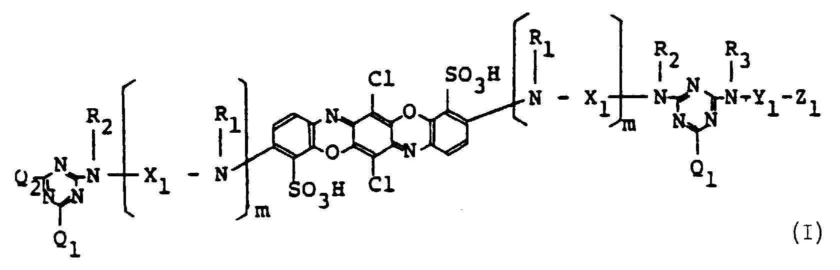 dans laquelle R₁, R₂ et R₃ sont indépendamment des atomes d'hydrogène ou des groupements alkyle inférieur non substitués ou substitués, X₁ est un groupement de pontage aliphatique linéaire, ramifié ou cyclique, non substitué ou substitué ou un groupement de pontage aromatique substitué ou non substitué, m est 0 ou 1, Y₁ est un groupement phénylène non substitué ou substitué ou naphtylène non substitué ou substitué, Z₁ est -SO₂CH=CH₂ ou -SO₂CH₂CH₂L₁ où L₁ est un groupement pouvant être coupé sous l'action d'une base, Q₁ est un radical halogéno, pyridinio non substitué ou substitué, -N(R₄)R₅, -OR₆ ou -SR₇ où R₄, R₅, R₆ et R₇ sont indépendamment des atomes d'hydrogène ou des groupements alkyle, phényle, naphtyle ou benzyle non substitués ou substitués, et Q₂ est un radical chloro ou fluoro ; ou
au moins un composant choisi dans le groupe des dérivés de dioxazine représentés par la formule suivante (II) sous forme acide libre : 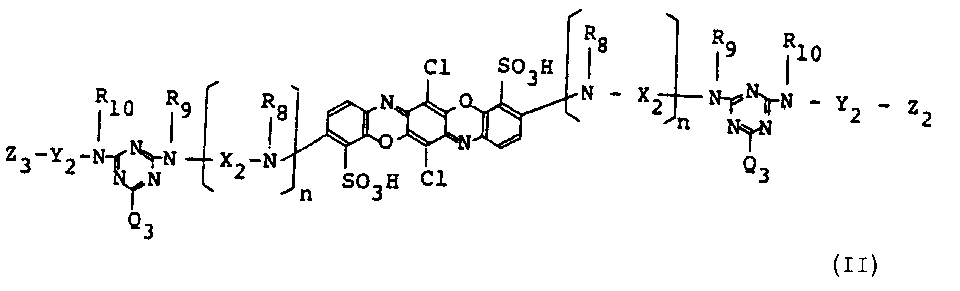 dans laquelle R₈, R₉ et R₁₀ sont indépendamment des atomes d'hydrogène ou des groupements alkyle inférieur non substitués ou substitués, X₂ est un groupement de pontage aliphatique linéaire, ramifié ou cyclique non substitué ou substitué ou un groupement de pontage aromatique substitué ou non substitué, n est 0 ou 1, Y₂ est un groupement phénylène non substitué ou substitué ou naphtylène non substitué ou substitué, Z₂ et Z₃ sont indépendamment -SO₂CH=CH₂ ou -SO₂CH₂CH₂L₂ où L₂ est un groupement pouvant être coupé sous l'action d'une base, et Q₃ est un radical halogéno, pyridinio non substitué ou substitué, -N(R₁₁)R₁₂, -OR₁₃ ou -SR₁₄ où R₁₁, R₁₂, R₁₃ et R₁₄ sont indépendamment des atomes d'hydrogène ou des groupements alkyle, phényle, naphtyle ou benzyle non substitués ou substitués; ou
un mélange du dérivé de dioxazine de formule (I) et du dérivé de dioxazine de formule (II); et
B) au moins un composant choisi dans le groupe des composés anthraquinoniques représentés par la formule suivante (III) sous forme acide libre : 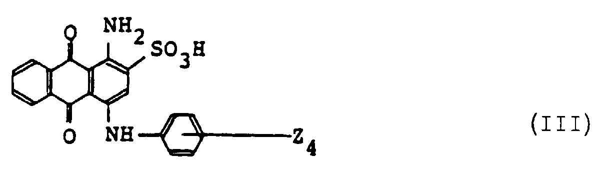 dans laquelle Z₄ est -SO₂CH=CH₂ ou -SO₂CH₂CH₂L₃ où L₃ est un groupement pouvant être coupé sous l'action d'une base.

2. Composition selon la revendication 1, dans laquelle la quantité en poids de B) est de 0,01 à 90 fois celle de A).

3. Composition selon la revendication 1 ou 2, qui contient, en tant que A, un quelconque dérivé de dioxazine de formule (I) ou (II).

4. Composition selon la revendication 1 ou 2, qui contient, en tant que A, un mélange du dérivé de dioxazine de formule (I) et du dérivé de dioxazine de formule (II).

5. Composition selon la revendication 4, dans laquelle la quantité en poids de l'un du dérivé de dioxazine de formule (I) et du dérivé de dioxazine de formule (II) est jusqu'à 100 fois celle de l'autre dérivé de dioxazine.

6. Composition selon la revendication 4, dans laquelle la quantité en poids du dérivé de dioxazine de formule (II) est de 0,05 à 100 fois celle du dérivé de dioxazine de formule (I).

7. Procédé pour teindre ou imprimer un matériau fibreux cellulosique ou un matériau fibreux contenant des fibres cellulosiques, qui consiste à leur appliquer la composition selon l'une quelconque des revendications 1 à 6.

8. Utilisation de la composition selon l'une quelconque des revendications 1 à 6, pour teindre ou imprimer un matériau fibreux cellulosique ou un matériau fibreux contenant des fibres cellulosiques.
